# EUROPÄISCHE PATENTSCHRIFT

(11) **EP 3 285 144 B1**
(45) Veröffentlichungstag und Bekanntmachung des Hinweises auf die Patenterteilung: **17.02.2021**
(21) Anmeldenummer: 17186858.1
(22) Anmeldetag: 18.08.2017
(51) Int. Cl.: G06F 3/01

(54) **SYSTEM UND VERFAHREN ZUR HAPTISCHEN INTERAKTION MIT VIRTUELLEN OBJEKTEN**
SYSTEM AND METHOD FOR HAPTIC INTERACTION WITH VIRTUAL OBJECTS
SYSTÈME ET PROCÉDÉ D'INTERACTION HAPTIQUE AVEC DES OBJETS VIRTUELS

(30) Priorität: 18.08.2016 DE 102016215481
(43) Veröffentlichungstag der Anmeldung: 21.02.2018
(73) Patentinhaber: Technische Universität Dresden, 01069 Dresden (DE)
(72) Erfinder: Richter, Andreas, 01219 Dresden (DE); Paschew, Georgi, 01067 Dresden (DE); Marschner, Uwe, 01640 Coswig (DE)
(74) Vertreter: Kailuweit & Uhlemann Patentanwälte Partnerschaft mbB

(56) Entgegenhaltungen:
- EP-A1- 2 827 224
- WO-A2-2011/071352

## Beschreibung

Die Erfindung betrifft ein System und ein Verfahren zur haptischen Interaktion mit virtuellen Objekten.

Technologien zur Simulation der Realität, wie beispielsweise virtuelle (virtual reality, VR) und erweiterte Realitäten (augmented reality, AR), bieten ungeahnte Möglichkeiten, die menschliche Wahrnehmung zu erweitern. Kann man heutzutage im Kino Filme dreidimensional erleben, erlaubt es die Virtuelle Realität, inmitten dieser dreidimensionalen virtuellen Welten zu stehen und diese zu beobachten. Für eine realistische Wahrnehmung der VR/AR-Welten sollten alle Sinne angeregt werden. Aktuelle Interaktionssysteme des Menschen mit technischen Systemen nutzen in unterschiedlichem Maße die Modalitäten Sehen, Hören und Fühlen.

Um visuelle Realitätsnähe zu erlangen, sind dreidimensionale und qualitativ hochwertige Visualisierungen notwendig. Dies erfolgt mit stereoskopischen und 3D-Displays, welche in vielfältigen Ausführungen kommerziell erhältlich sind. Die technische Herausforderung zu deren Nutzung als Mensch-Maschine-Schnittstelle besteht vor allem in der Erfüllung des Anspruchs hoher visueller Realitätstreue bei gleichzeitiger Echtzeitfähigkeit dreidimensionaler Visualisierungen. Derzeitige Entwicklungen auf diesem Gebiet beschäftigen sich hauptsächlich mit Möglichkeiten der effizienten und schnellen Verarbeitung großer Datenmengen, Prinzipien zur Darstellung virtueller Informationen und deren echtzeitfähiger Visualisierung. Diese Arbeiten waren teilweise Inhalte der Projekte AVILUS und AVILUS+ und haben bereits zu einem befriedigenden Entwicklungsstand und tragfähigen Methoden geführt. Das Projekt Endoguide beschäftigt sich mit einem endoskopischen System, welches befähigt ist, automatisch eine optische Panoramaansicht zu Dokumentations- und Navigationszwecken zu generieren.

Durch zusätzliche Präsentation dreidimensionaler akustischer Informationen kann die Realitätsnähe erheblich gesteigert werden. Auch in diesem Bereich sind bereits vielfältige kommerzielle Systeme erhältlich. Es ist sehr wahrscheinlich, dass ein nächster Entwicklungsschwerpunkt der Technologien der virtuellen Realität die Einbeziehung auch der berührungsbasierten, physikalischen Interaktion des Menschen zu seiner virtuellen Umgebung sein wird. Damit könnte er als Teil der virtuellen Welt diese nicht nur visuell-akustisch beobachten, sondern alles, was in entsprechender Nähe ist, auch mit seinen bloßen Händen berühren. Allerdings ist die Realisierung von Systemen der berührungsbasierten, physikalischen Interaktion des Menschen mit Maschinen noch immer eine große Herausforderung.

Es gibt zwei unterschiedliche Displaysysteme.

Taktile Displays sind prinzipiell in der Lage, Informationen zu Eigenschaften einer virtuellen Oberfläche zu vermitteln, insbesondere zu Konturen, Texturen, Relief und Weichheit. Die Leistungsfähigkeit kommerziell verfügbarer Systeme ist allerdings sehr beschränkt und jeweils auf spezielle Marktsegmente fokussiert.

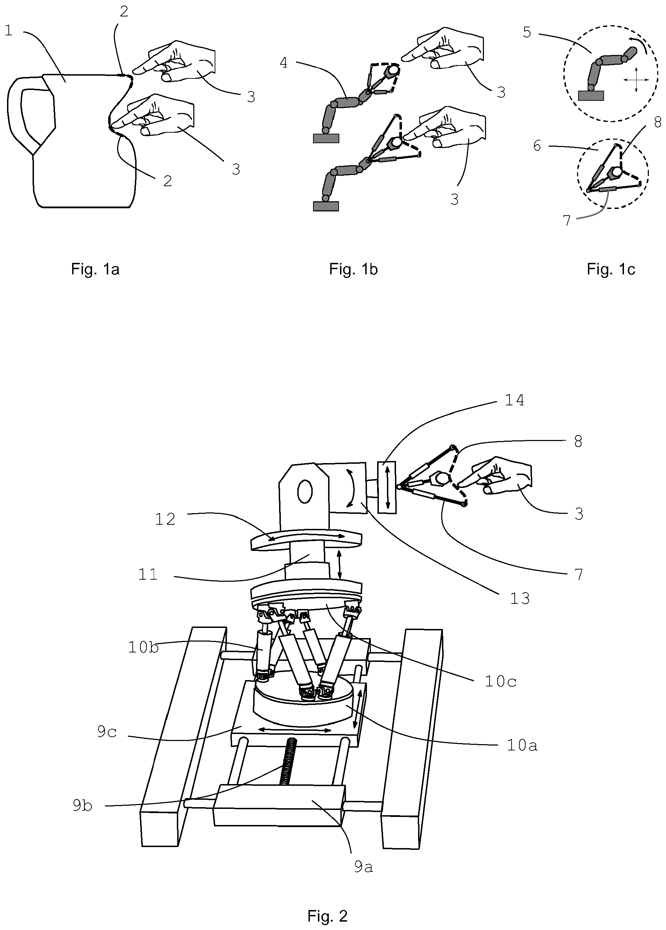

*Elektrokutane Displays* (K.A. Kaczmarek, Electrotactile adaptation on the abdomen: Preliminary results, IEEE Trans. Rehab. Eng. 8 (2000), 499-505) stimulieren die Haut des Nutzers mit elektrischen Vibrationen (in Abb. 2 die Zungenhaut), welche durch Elektroden erzeugt werden. Sie besitzen einen sehr einfachen, kompakten und miniaturisierbaren Aufbau. Es lassen sich sehr gut lokalisierbare Eindrücke zu Konturen und Texturen erzeugen. Aufgrund kaum vermeidbarer Hautirritationen und Schmerzen, welche hauptsächlich durch Schwankungen des Hautwiderstands verursacht werden, können sich nur wenige Menschen an diese Art der Informationsvermittlung gewöhnen.

*Vibrotaktile Displays* (Y. Ikei, K. Wakamatsu, S. Fukuda, Texture presentation by vibratory tactile display, Proc. IEEE Virtual Reality Ann. Int. Symp. (1997), 199-205) erzeugen auf der Displayoberfläche mechanische Schwingungen. Diese Schwingungen spielen in der taktilen Rekognition des Menschen eine wesentliche Rolle. Der Mensch überstreicht bei der Oberflächenerkundung die Oberfläche eines Körpers mit einer charakteristischen Fühlgeschwindigkeit von ca. 12 bis 15 cms⁻¹. Dabei wird die Haut durch die Papillarlinien an den Fingerkuppen in für die Textur charakteristische Schwingungen versetzt, die typischerweise im Bereich von etwa 10 bis 400 Hz liegen (K.O. Johnson, The roles and functions of cutaneous mechanoreceptors. Curr. Opinion Neurobiology 11 (2001), 455-461; J. Scheibert, S. Leurent, A. Prevost, G. Debregas, The Role of Fingerprints in the Coding of Tactile Information Probed with a Biomimetric Sensor. Science 323 (2009), 1503-1506). Mit breitbandigen vibrotaktilen Displays, welche definierte Schwingungen in diesem Frequenzbereich erzeugen können, lassen sich deshalb Impressionen von vielfältigen Texturen vermitteln.

In der Forschung werden vielfältige Ansätze zu deren technischer Realisierung verfolgt, welche u.a. auf Formgedächtnisaktoren (P.S. Wellman, W.J. Peine, G. Favalora, R.D. Howe, Mechanical design and control of a high-bandwidth shape memory alloy tactile display. Experimental Robotics 5 (1998), 56-66), Ultraschall (T. Watanabe, S. Fukui, A method for controlling tactile sensation of surface roughness using ultrasonic vibration, IEEE Proc. Robot. Automat. 1 (1995), 1134-1139), elektroaktiven Polymeraktoren (M. Matysek, P. Lotz, K. Flittner, H.F. Schlaak, Vibrotactile display for mobile applications based on dielectric elastomer stack actuators. Proc. SPIE 7642 (2010), 76420D) sowie piezoelektrischen Aktoren (J.R. Summers, C.M. Chanter, A broadband tactile array on the fingertip. J. Acoust. Soc. America 112 (2002), 2118-2126) beruhen.

Vibrotaktile Systeme, auch speziell für Touch-Screens, werden bereits seit einigen Jahren von Immersion und Texas Instruments angeboten und bereits in Smartphones und Smartwatches als haptische Vibrationssysteme eingesetzt, die durch Vibrationen unterschiedlicher Natur Informationen vermitteln können. Diese Systeme beruhen hauptsächlich auf Piezoaktoren, Exzenterschwingern (eccentric rotating mass ERM) und Linear-Resonanz-Aktoren (LRA). Trotz der großen Bandbreite an vermittelbaren Texturen und der guten technischen Realisierbarkeit konnten sich vibrotaktile Displays bislang nicht wirklich durchsetzen, denn sie besitzen einen wesentlichen Nachteil: Vibrationen sind für den Menschen nur sehr schwer lokalisierbar.

*Statische oder Displacement-Displays* enthalten ein Aktorarray, welches die taktile Bildinformation durch Änderungen in der Einzelaktor-Höhe erzeugt. Dadurch, dass die virtuelle Oberfläche direkt physikalisch nachgebildet wird, lassen sich prinzipiell alle taktilen Informationen vermitteln. Die dargestellte Information ist ausgezeichnet lokalisierbar, Konturen und Reliefs, aber auch sehr kleine Strukturen oder Druckverteilungen sind darstellbar. Die Fähigkeit zur Vermittlung von Texturen wird im Wesentlichen durch die Miniaturisierungs- und Integrationsgrenzen der Aktorpixel und Aktorarrays begrenzt. Displacement-Displays werden gegenwärtig pneumatisch (L. Yobas, M.A. Huff, F.J. Lisy, D.M. Durand, A novel bulk-micromachined electrostatic microvalve with a curved-compliant structure applicable for a pneumatic tactile display, J. Microelectromech. Syst. 10 (2001) 2, 187-196), elektromagnetisch (T. Fukuda, H. Morita, F. Arai, H. Ishihara, H. Matsuura, Micro resonator using electromagnetic actuator for tactile display, Int. Symp. on Micromechatronics and Human Science, (1997), 143-148; J.H. Killebrew et al., A dense array stimulator to generate arbitrary spatio-temporal tactile stimuli. J. Neurosci. Methods 161 (2007), 62-74), mit Formgedächtniselementen (P.M. Taylor, A. Moser, A. Creed, A sixty-four element tactile display using shape memory alloy wires, Displays 18 (1998), 163-168; P.M. Taylor, A. Moser, A. Creed, The design and control of a tactile display based on shape memory alloys. IEEE Proc. Robot. Automat. 2 (1997), 1318-1323) elektroaktiven Polymeraktoren (EAP) (M. Matysek, P. Lotz, H.F. Schlaak, Tactile display with dielectric multilayer elastomer actuators. Proc. SPIE 7287 (2009), 72871D) oder piezoelektrischen Aktoren (C.M. Chanter, I.R. Summers, Results from a tactile array on the fingertip, Proc. Eurohaptics 2001, Birmingham, (2001), 26-28; J. Pasquero, V. Hayward, STReSS: A practical tactile display system with one millimeter spatial resolution and 700 Hz refresh rate. Proc. Eurohaptics 2003, 94-110) angetrieben. Motiviert durch den Bedarf Blinder und Sehbehinderter an fühlbaren Grafiken entstanden unter Mitwirkung der TU Dresden hochintegrierte Displacement-Displays mit einer großen Display-Fläche. Das BrailleDis 9000-System, welches auf einer Plattform auf Basis modifizierter Braille-Zellen-Module mit piezoelektrischen Bimorph-Aktoren beruht, besitzt 7200 (120x60) Stifte (M. Kraus, T. Völkel, G. Weber, An off-screen model for tactile graphical user interfaces. Lecture Notes Comp. Sci. 5105 (2008), 865-872; T. Völkel, G. Weber, U. Baumann, Tactile graphics revised: the novel BrailleDis 9000 pin-matrix device with multitouch input. Lecture Notes Comp. Sci. 5105 (2008), 835-842) und bietet sehbehinderten Menschen erstmals eine grafikbasierte Kommunikationsoberfläche.

Trotz ihrer außerordentlichen Gebrauchsvorteile sind Displacement-Displays gegenwärtig praktisch ausschließlich auf Anwendungen im Sehbehindertenbereich beschränkt. Die aktuellen technischen Ansätze besitzen elementare Nachteile hinsichtlich ihrer Miniaturisierbarkeit, den erreichbaren Integrationsgraden und Rastermaßen sowie den Kosten, da die meisten von ihnen komplizierte präzisionsmechanische Konstruktionen sind. Sie sind zur Realisierung integrationsfähiger dynamischer taktiler Oberflächen mit hoher örtlicher Auflösung ungeeignet.

Bekannt sind auch Displacement-Displays in Form großintegrierter monolithischer, mikrofluidischer Displays mit aktiven Bauelementen auf Basis intrinsisch aktiver Polymere (DE 102 26 746 A1), wobei die aktuelle Integrationsdichte mehr als 1.000 Aktoren pro cm² beträgt. Die Displays sind transparent, nur einen Millimeter dick und lassen sich flexibel ausführen (A. Richter, G. Paschew, Optoelectrothermic control of polymer-based highly integrated MEMS applied in an artificial skin. Adv. Mater. 21 (2009), 979-983; G. Paschew, A. Richter, High-resolution tactile display operated by an integrated 'Smart Hydrogel' actuator array. Proc. SPIE 7642 (2010), 764234). Die minimale Beschreibzeit des Displays liegt im Bereich von 400 ms.

*Kinästhetische Displays* vermitteln dem Nutzer realitätsnahe Eindrücke zur Manipulation von virtuellen Objekten, indem sie mit ihren Effektoren dynamische mechanische Wirkungen auf den Menschen ausüben. Sie sind Regelkreise, d.h., der Mensch soll über diese Systeme auch einen Einfluss auf die virtuelle Welt nehmen können. Die Displays stimulieren die kinästhetischen Sensoren des Menschen, die Eindrücke über den inneren Zustand eines Körperteils durch Gelenkwinkel und Muskelanspannung vermitteln. Durch Vibrationen des kinästhetischen Displays ist es zudem möglich, Dynamik erlebbar zu machen. Es gibt drei Ausführungsformen kinästhetischer Displays: (1) aktive Joysticks, (2) Force Feedback-Displays (FFD, meist elektromechanische Lenkräder oder Hand-Exoskelette) sowie Displacement-Feedback-Displays (DFD, elektromechanische Arm-Exoskelette), die größere Körperteile, z.B. den Arm, in das Displaysystem einbeziehen. In diesen Bereichen existieren bereits mehrere kommerzialisierte Produkte (z. B. von Cyberglovesystems, Geomagic), die meist mit 2D-Bildschirmen gekoppelt sind (Phantom Premium 3.0 von Geomagic). Am fortschrittlichsten sind kombinierte Systeme, etwa von Immersive Touch, bei denen ein aktiver Joystick in Form eines Stiftes mit einem visuellen 3D-Display gekoppelt ist, sodass man mit diesem Stift die Oberfläche eines virtuellen Objektes berühren kann und, wenn man mit dem Stift über die Oberfläche fährt, Informationen über dessen Form und Oberflächentextur erhält.

Für mobile Elektronik mit Touch-Displays, etwa Smartphones und Tablets, gibt es ein Vibrationsfeedback zur Bestätigung von Aktionen. Insgesamt betrachtet befinden sich die Technologien intermodaler und taktiler Displays noch in einer frühen Phase der Entwicklung und sind nicht leistungsfähig genug, um als Plattform für neue Methoden und Technologien zu dienen.

Für die Technologien der Virtuellen Realität (VR) ist es ein essenzieller Nachteil, dass der Stand der Technik so gut wie keine Möglichkeiten bietet, mit den virtuellen Objekten direkt berührungsbasiert zu interagieren, sie also z.B. mit den bloßen Händen anzufassen. Stattdessen wird stets ein Hilfsmittel in Form von Force-Feedback- oder Displacement-Feedback-Displays benötigt. In den einfachsten Fällen wird beispielsweise bei einem Fahrsimulator zum Film ein Lenkrad vibratorisch oder per Drehmoment zum Film synchronisiert manipuliert. Eine vergleichbare Wirkungsweise besitzen Spielzeuge im Erotikbereich (Tele- oder Cyberdildonics), bei denen etwa Vibratoren über zum Teil drahtlose Datenverbindungen zu den Film- bzw. VR-Sequenzen synchronisiert betätigt oder auch wechselseitig durch Partner von sozialen Netzwerken stimuliert werden. Die hier übermittelbaren haptischen Informationen sind sehr limitiert.

Die bislang leistungsfähigsten Systeme ermöglichen es, mit Force-Feedback- oder Displacement-Feedback-Systemen indirekt über ein Hilfsmittel das virtuelle Objekt zu berühren und seine Form zu erkunden. Mit Force-Feedback-Systemen in Form von Handschuhen, welche die Freiheitsgrade der Finger der Nutzerhand definieren können, lassen sich einfache virtuelle Objekte wie Würfel oder Kugeln greifend erleben. Ein weiteres System, etwa das Phantom-System von Geomatic, besitzt als Force-Feedback-System einen Stift, den der Nutzer in der Hand hält. Über eine aktive Mechanik, meist eine Hebelarm-Mechanik, kann der Stift so manipuliert werden, dass der Nutzer mit diesem die Oberfläche und Form des virtuellen Objektes erkunden kann.

Bekannt ist beispielsweise auch die JP H08-257 947 A, welche ein taktiles Display zur Darstellung haptischer Eigenschaften von virtuellen Objekten offenbart. Dabei ermöglicht das Display dem Nutzer lediglich die Kontaktierung des Objektes mittels einer Fingerspitze, was für die Realisierung des haptischen Eindrucks eines Gesamtgegenstands nicht ausreichend ist. Des Weiteren wird die Bewegung der Hand über ein am Arm des Anwenders angeordnetes Hilfsmittel erfasst. Durch diese Limitierungen ist die Erzeugung eines Gesamtperzepts nicht möglich.

Die EP 2 827 224 A1 beschreibt ein System und Verfahren, welches es ermöglicht, virtuelle visuelle 3D-Objekte zu vergegenständlichen, sodass diese direkt mit bloßen Händen durch den Anwender berührbar sind. Dabei werden dreidimensionale Daten des Anwenders bzw. des interessierenden Körperteils erfasst, ebenso die Daten des virtuellen dreidimensionalen Objektes (die auch berechnet werden können), beide durch eine Datenverarbeitung aufbereitet und anschließend in einem visuellen 3D-Subsystem synchronisiert miteinander kombiniert und in hochwertiger Renderung dargestellt. Der Anwender sieht nun sein gerendertes Körperteil, z.B. die Hände, in unmittelbarem, definiertem räumlichen Bezug zum virtuellen 3D-Objekt.

In der WO 2011/071352 werden zwei taktile Rückkopplungsgeräte offenbart, welche taktile Informationen auf eine Hand oder einen Finger des Benutzers übertragen, korrespondierend zu einem virtuellen 3D-Objekt, welches der Benutzer in einer virtuellen Umgebung berührt.

Gleichzeitig werden mit einem haptischen Subsystem, welches ein positionier- und deformierbares taktiles Display umfasst, die Oberflächenform und die Oberflächeneigenschaften des virtuellen Objektes dargestellt.

Durch eine Kollisionspunktprognostik bzw. -bestimmung wird dafür Sorge getragen, dass durch entsprechende Positionierung des taktilen Displays der Anwender genau im visuell richtigen Moment das virtuelle Objekt berührt und die richtigen fühlbaren Oberflächeneigenschaften rund um den Kollisionspunkt angezeigt werden, Anwender und virtuelles Objekt also miteinander synchronisiert sind. Der Anwender hat so ein Gesamtperzept, er sieht und fühlt das nun für ihn vergegenständlichte und tatsächlich existierende virtuelle Objekt, tastet aber real auf dem entsprechend positionierten taktilen Display.

Der Nachteil dieses Systems besteht darin, dass durch die Notwendigkeit der Anordnung des visuellen Subsystems und des haptischen Subsystems in einem definierten Abstand zur Erzeugung eines Gesamtperzepts nur eine eingeschränkte Nutzbarkeit gegeben ist. Mit dem System lassen sich dabei nur Objekte bestimmter Größe und Form wiedergeben, die haptische Repräsentation eines beliebigen virtuellen 3D-Objektes ist nicht darstellbar. Zudem ist eine freie Positionierung des Objekts im Raum durch die statische Ausgestaltung des visuellen Subsystems nicht möglich. Auch die Kombination mit den haptischen Displaytechnologien des Technikstandes ist hier nicht zielführend, denn diese sind aufgrund unzureichender Darstellungsmöglichkeiten bzw. Funktionen nicht in der Lage, beliebige oder zumindest vielfältige virtuelle 3D-Objekte vergegenständlicht und damit anfassbar darzustellen.

Es ist daher Aufgabe der vorliegenden Erfindung, ein haptisches Displaysystem nach Anspruch 1, ein System zur Interaktion mit virtuellen Objekten nach Anspruch 13, ein Verfahren zur Interaktion mit virtuellen Objekten nach Anspruch 14 und eine Verwendung eines haptischen Displaysystems anzugeben, wobei die Erfindung zur Interaktion mit bzw. zur Vergegenständlichung von virtuellen dreidimensionalen Objekten dient und somit die im Stand der Technik bestehenden Nachteile überwindet.

Die Aufgabe wird durch die unabhängigen Ansprüche gelöst. Vorteilhafte Ausgestaltungen sind in den abhängigen Ansprüchen angegeben.

Dem erfindungsgemäßen haptischen Displaysystem liegt der Gedanke zugrunde, dass zur haptischen Darstellung des beliebigen virtuellen dreidimensionalen Objektes -synchronisiert mit der visuellen Darstellung- nur dessen fühlbare haptischen Eigenschaften im Oberflächenbereich am Kollisionspunkt bzw. Berührungsbereich wichtig sind. Das erfindungsgemäße haptische Displaysystem (Morphling), welches diese Eigenschaften darstellt, umfasst dazu prinzipiell drei Funktionsgruppen, die untereinander und zu einem visuellen Subsystem synchronisiert arbeiten:
- (1) ein deformierbares, formveränderliches taktiles Display, welches oberflächenbezogene fühlbare Eigenschaften wie Texturen, Konturen, Reliefs, Objektwärme, Nachgiebigkeit (Weichheit), Feuchte vermittelt,
- (2) eine Positioniervorrichtung, welche das taktile Display an die Position des fühlbar anzuzeigenden Oberflächensegmentes bzw. -ausschnittes eines virtuellen 3D-Objektes im dreidimensionalen Raum platziert, und
- (3) einen Deformationsmechanismus, der das deformierbare taktile Display an die Form des anzuzeigenden Objekt-Oberflächensegmentes anpasst.

Der Betrieb der einzelnen Subsysteme kann statisch oder dynamisch erfolgen. Beim dynamischen Betrieb kann beispielsweise die Lage und/oder die Form des taktilen Displays während der Berührung durch den Anwender verändert werden. In Ausführungsformen der Erfindung weist das haptische Displaysystem eine Vorrichtung zur Positionierung im dreidimensionalen Raum auf. Damit kann die taktile Displayeinheit an der Stelle positioniert werden, an welcher der Anwender das virtuelle 3D-Objekt berühren möchte. Die Positionierungsvorrichtung kann die taktile Displayeinheit bei Bedarf entsprechend der Oberflächengestalt des virtuellen Objektes nachführen und dessen Lage im Raum anpassen. Die Nachführung und Anpassung kann entsprechend synchron zur Änderung des oder der Berührungspunkte(s) durch den Nutzer erfolgen (dynamischer Betrieb). Dadurch ist es zusammen mit dem Deformationsmechanismus möglich, auch Objekte größerer Abmessungen und nahezu beliebiger Gestalt haptisch abzubilden. Um eine Bewegung des Nutzers in größeren Räumen zu gestatten, kann die Vorrichtung auf einem beweglichen Chassis angeordnet sein. Die Positionierung im dreidimensionalen Raum erfolgt dabei vorzugsweise in Echtzeit und synchron zur visuellen Objektrepräsentation, um ein realistisches Gesamtperzept zu ermöglichen.

Im Zusammenwirken mit dem taktilen Display kann die Positionierung des taktilen Displays auch zur Simulation bestimmter oberflächenbezogener fühlbarer Eigenschaften des virtuellen dreidimensionalen Objektes genutzt werden, indem sie dem oder den Berührungspunkt(en) bei einer Bewegung des Anwenders synchron folgt oder nur teilweise bzw. eine Relativbewegung dazu ausführt.

In Ausführungsformen der Erfindung ist die Vorrichtung zur Positionierung im dreidimensionalen Raum des taktilen Displaysubsystems als Roboterarm, Delta-Robot, Mehrachsensystem oder Hexapod ausgebildet.

In Ausführungsformen der Erfindung ist die Vorrichtung zur Positionierung im dreidimensionalen Raum des taktilen Displaysubsystems als Kombination aus Roboterarm, Delta-Robot oder Hexapod ausgebildet. Dadurch ist das taktile Displaysubsystem nach Bedarf positionierbar, wobei beispielsweise die Bewegung des Systems in X-Y-Richtung mittels Hexapod und die Positionierung in der Z-Richtung durch den Roboterarm erfolgt.

In Ausführungsformen der Erfindung ist die Vorrichtung zur Positionierung im dreidimensionalen Raum des taktilen Displaysubsystems mit Kombinationen von Achsen, Linearantrieben und bzw. oder rotatorischen Antrieben ausgebildet, deren Wirkungsweise und Freiheitsgrade so aufeinander abgestimmt sind, dass sie die Positionierung des taktilen Displaysubsystems in X-, Y- und Z-Richtung in der erforderlichen Präzision und Geschwindigkeit realisieren können.

In Ausführungsformen der Erfindung ist die Vorrichtung zur Positionierung im dreidimensionalen Raum des taktilen Displaysubsystems als Kammersystem ausgebildet. Dabei weist die Vorrichtung eine Vielzahl von Kammern auf, wobei deren Volumen durch Zu- bzw. Abführung von Fluiden (Gas oder Flüssigkeit) verändert werden kann. Bei definierter Zuführung des Fluidums kann dabei eine Volumenzunahme erfolgen. Bei Entfernen des Fluidums erfolgt dagegen eine Volumenabnahme. Dabei kann die Zuführung des Fluidums derart gezielt erfolgen, dass das Fluidum selektiv einzelne Kammern entsprechend den Anforderungen der Gestaltung des Objekts zugeführt wird. Durch diese Ausgestaltung ist beispielsweise die Gestaltung von Hohlräumen möglich.

Im Sinne der vorliegenden Erfindung beziehen sich die Angaben der X-Richtung, Y-Richtung und Z-Richtung auf die Achsen eines kartesischen Koordinatensystems.

Das taktile Displaysystem ist in einer erfindungsgemäßen Ausführung derart ausgebildet, dass es ein deformierbares taktiles Display und eine Vorrichtung zur Deformation desselben aufweist. Das taktile Display besitzt die Aufgabe, im Bereich des Kollisionspunktes, also des Punktes, an dem der Anwender das virtuelle Objekt berühren möchte, die taktilen Oberflächeneigenschaften des virtuellen Objektes darzustellen. Dies betrifft insbesondere die Oberflächentextur, Konturen z.B. von erhabenen Linien oder Gräben, Reliefs, Weichheit, Objektwärme oder Feuchteindrücke.

Das taktile Displaysystem weist in einer Ausführung eine Segmentierung bzw. Unterteilung in mehrere Elemente auf, die in ihrem Verhalten unabhängig voneinander steuerbar ausgebildet sind. Das ermöglicht die Positionierung jeweils eines dieser Elemente unter jeweils einen Finger oder anderer Stellen am menschlichen Körper oder unter jeder Hand.

In einer Ausführungsform umfasst das taktile Display vibrotaktile Displayfunktionalität. Dadurch lassen sich durch Variation der Schwingungsfrequenz des möglichst breitbandigen taktilen Displayelementes dem Nutzer Impressionen von vielfältigen Oberflächen-Texturen, eingeschränkt auch Reliefs und Weichheit (Nachgiebigkeit), vermitteln.

In Ausführungsformen der Erfindung weist das haptische Displaysystem zumindest eine Vorrichtung zur Erzeugung von Schwingungen auf, welche im taktilen Display oder in einzelnen Teilelementen des taktilen Displays eine fühlbare Vibration erzeugt. Die Vorrichtung zur Erzeugung von Schwingungen kann dabei piezoelektrisch, magnetostriktiv, elektrodynamisch, elektrostatisch, elektromechanisch, elektromagnetisch, pneumatisch oder hydraulisch Vibrationen erzeugend ausgebildet sein. Neben herkömmlichen Effektträgermaterialien sind aufgrund ihrer potenziellen Massevorteile und der mechanischen Flexibilität polymere Effektträger von hohem Interesse, so etwa piezoelektrische Polymere in Form von Bulk-Piezopolymeren, Polymer-Kompositen oder Voided Charged-Polymeren, die detailliert z.B. in [K.S. Ramadan, D. Sameoto, S. Evoy, A review of piezoelectric polymers as functional materials for electromechanical transducers, Smart Mater. Struct. 23 (2014) 033001] beschrieben sind. Andere geeignete Polymervertreter sind dielektrische Elastomeraktoren beispielsweise auf Basis von Polydimethylsiloxan (PDMS), Polyurethanen oder Acrylat-Polymeren, die ebenfalls geringe Masse, elastische Eigenschaften und eine gute Frequenzbandbreite offerieren.

Das taktile Display weist in einer Ausführung eine Segmentierung bzw. Unterteilung in mehrere vibrotaktile Elemente auf, die in ihrem Schwingungsverhalten unabhängig voneinander steuerbar ausgebildet sind. Dies ermöglicht es dem taktilen Display, im Berührungsbereich des Anwenders lokal unterschiedliche Oberflächeneigenschaften darzustellen. Dies ist insbesondere dann wichtig, wenn der Nutzer z.B. mit seiner Hand tatsächlich über die Displayoberfläche streicht. In diesem Fall müssen die haptischen Oberflächeneigenschaften des virtuellen Objektes im Berührbereich mit der erforderlichen lokalen Flächenauflösung dargestellt werden. Zusammen mit der Deformations- und der Positionierungseinrichtung können bestimmte oberflächenbezogene fühlbare Eigenschaften des virtuellen dreidimensionalen Objektes simuliert werden. So wird der Eindruck, den ein Objekt vermittelt, durch die Elastizität, d.h. die Nachgiebigkeit im Mikro- und Makrobereich, bestimmt. Eine Relativbewegung der Hand und/oder des Fingers zur Oberfläche des Objektes vermittelt die Objekttextur. Diese kann sowohl durch die Frequenz, Amplitude und Phase der vibrotaktilen Elemente, als auch durch eine vordefinierte Textur in Verbindung mit der Geschwindigkeit der Relativbewegung zwischen taktilem Display und Nutzer simuliert werden.

In einer weiteren Ausführung der Erfindung weist das taktile Display keine Unterteilung der vibrotaktilen Displayfunktionalität auf. Auf die Segmentierung kann verzichtet werden, wenn der Nutzer z.B. mit seiner Hand nur virtuell über die Objektoberfläche fährt, d.h., er sieht und fühlt, dass er über die Oberfläche des virtuellen 3D-Objektes streicht, die Positioniervorrichtung führt jedoch tatsächlich das durch das taktile Display dargestellte Oberflächensegment in Echtzeit nach. Seine Finger verbleiben damit real in etwa an den ursprünglichen Kollisionspunkten. Zum Darstellen der veränderlichen Texturen und anderen Oberflächeneigenschaften an den Kollisionspunkten kann die Frequenz des gesamten vibrotaktilen Displays dynamisch verändert werden. Anschaulich ausgedrückt: wenn der Nutzer beispielsweise sieht, dass er gleich über eine raue Oberfläche streicht, dann verändert das taktile Display im synchronisierten Moment seine Vibrationsfrequenz entsprechend, sodass der Nutzer den Rauigkeitsunterschied fühlt. Er wird nicht merken, dass seine Finger effektiv ihre Auflageposition auf dem taktilen Display gar nicht ändern. Für diesen Fall ist in einer Ausführungsform der Erfindung vorstellbar, dass das taktile Display nicht zwangsläufig deformierbar ausgeführt sein muss. Wird beispielsweise nur mit einem Finger gefühlt, reicht es aus, dass die Positioniereinrichtung das taktile Display in Echtzeit an die Position und in den richtigen x-,y-,z-Raumneigungswinkel positioniert, um das virtuelle Oberflächensegment des virtuellen 3D-Objektes anzuzeigen, und entsprechend dem bewegten Finger am Auflagepunkt immer die richtige Texturfrequenz und Oberflächenposition sowie -neigung durch entsprechendes Nachführen anzeigt, sodass der Nutzer mit dem Finger Impressionen von der Oberflächentextur und Oberflächenform erhält.

In einer Ausführungsform der Erfindung umfasst das taktile Display Elemente, welche die Textur des virtuellen 3D-Objektes generieren, wobei die Elemente nach dem Buckling-Effekt arbeiten. Durch gezieltes mechanisches Verspannen oder Relaxieren einer elastomeren Oberfläche faltet sich diese definiert (engl. Buckling) und generiert auch auf größeren Flächen eine gut definierte und regelmäßig texturierte Oberflächenstruktur. Vergleichbare Effekte lassen sich auch dadurch erreichen, dass die fühlbare Rauigkeit einer rauen Oberflächenstruktur durch eine darüber befindliche elastische Schicht eingestellt wird, indem die Rauigkeitserhebungen von dieser definiert mehr oder weniger abgedeckt werden.

In Ausführungsformen der Erfindung bilden Teilelemente im Zusammenwirken ein taktiles Display. Es kann nicht nur aus einem vibrotaktilen Display bzw. Buckling-Effekt-Display oder einer Zusammensetzung von derartigen Teilelementen bestehen, sondern auch aus einer Kombination vibrotaktiler bzw. Buckling-Effekt-Displays mit zumindest einem statischen Display.

In Ausführungsformen der Erfindung wird die Oberflächenbeschaffenheit durch statische Displays dargestellt.

In Ausführungsformen der Erfindung weist das statische Display Teilelemente auf, welche als Aktorpixel, sogenannte Taxel (taktile Pixel), ausgebildet sind. Aktorpixel erlauben die Wiedergabe taktiler Informationen. Aufgrund ihrer geringen Dimensionierung ist es möglich, mit hoher Auflösung unterschiedliche taktile Merkmale darzustellen, insbesondere Konturen, Reliefs und bei entsprechender Auflösung auch Texturen.

In Ausführungsformen der Erfindung weist das statische Display eine Matrix aus Taxeln auf. Die Aktorpixel können dabei beispielsweise auf Basis intrinsisch aktiver Polymere ausgebildet sein. Damit können intermodale Displays geschaffen werden, welche aufgrund ihrer hohen Auflösung von derzeit bis zu 625 individuell steuerbaren Aktorpixeln pro cm² und ihrer Multimodalität Oberflächen physikalisch außerordentlich genau nachbilden können, was bislang technisch unmöglich war. Die Modalitäten der Taxel umfassen neben einer optischen Funktionalität die taktilen Parameter Taxelvolumen, -höhe und -weichheit, welche jeweils um fast eine Größenordnung moduliert werden können. Ein Display auf Basis dieser Aktorpixel kann deshalb Impressionen von einer virtuellen Oberfläche bezüglich Konturen, Reliefs, Texturen und Weichheit vermitteln [G. Paschew, R. Körbitz, A. Richter, Multimodal, high-resolution imaging system based on stimuli-responsive polymers, Adv. Sci. Technol. 82 (2013), 44 - 49].

In Ausführungsformen der Erfindung sind Taxel aus Polymeren ausgebildet, deren Phasenübergangsverhalten durch Umgebungsgrößen beeinflussbar ist. Als Umgebungsgrößen können dabei etwa physikalische Parameter, wie Druck, Temperatur, Beleuchtungsstärke oder chemische Parameter, wie pH-Wert, osmotischer Druck, dienen. Durch diese Umgebungsgrößen wird das Phasenübergangsverhalten der Aktorpixel zumindest im Bereich des Kollisionspunktes des Anwenders mit dem taktilen Element beeinflusst, sodass die Aktorpixel die strukturellen Gegebenheiten des Objektes auf dem Display abbilden können. Dabei können auch Informationen zur Dichte, Druck, Verformbarkeit und Oberflächengestaltung des Objektes mittels des taktilen Displays dem Anwender zugänglich gemacht werden.

In Ausführungsformen der Erfindung sind die Aktorpixel aus stimuli-sensitiven Hydrogelen ausgebildet, welche durch den Eintrag elektrischer, chemischer oder thermischer Energie in ihrem Volumenphasenübergangsverhalten beeinflussbar ausgebildet sind. Durch den Eintrag elektrischer, chemischer oder thermischer Energie wird dabei das Phasenübergangsverhalten der Hydrogele derart beeinflusst, dass eine Änderung des Phasenverhaltens erfolgt und somit eine direkte Änderung der mechanischen Eigenschaften des Hydrogels im Taxel. Dadurch können gezielt Informationen hinsichtlich der Beschaffenheit des Objektes zumindest am Kollisionspunkt durch das taktile Element abgebildet werden.

In Ausführungsformen der Erfindung weist das taktile Display Teilelemente unterschiedlicher Ausgestaltung auf. Dadurch können dem Anwender verschiedene taktile Eindrücke vermittelt werden. Die einzelnen Teilelemente werden beispielsweise als Aktorpixel-Matrix ausgebildet und nach Bedarf angesteuert, um die taktilen Eigenschaften des Objekts abzubilden.

In Ausführungsformen der Erfindung weist das taktile Display Teilelemente auf, welche kapazitiv, piezoelektrisch, elektrodynamisch, elektromagnetisch, elektromechanisch oder magnetostriktiv oder als dielektrische Elastomerelemente steuerbar ausgebildet sind. Dabei umfasst das Teilelement elektrisch kapazitive, piezoelektrische, magnetische, stromdurchflossene oder magnetostriktive Körper, welche als Aktor durch einen gezielten elektrischen oder magnetischen Feldeintrag steuerbar ausgebildet sind.

In Ausführungsformen der Erfindung weist das taktile Display Teilelemente auf, welche eine mechanische Texturierung ihrer Oberfläche ausbilden. Dadurch können unterschiedliche Rauigkeitseindrücke der Objektoberfläche abgebildet werden.

In Ausführungsformen der Erfindung weist das taktile Display Teilelemente auf, welche derart ausgebildet sind, dass diese punktuell pneumatisch eine Einwirkung auf die Hand oder andere Körperteile des Anwenders im Kollisionspunkt ausüben. Dabei kann die Einwirkung als Über- oder Unterdruck erfolgen.

In Ausführungsformen der Erfindung sind das taktile Display und/oder die Teilelemente temperierbar ausgebildet. Dabei können das taktile Display im Ganzen oder die einzelnen Teilelemente gezielt temperierbar ausgebildet sein. Dadurch können beispielsweise thermische Materialeigenschaften, wie die Wärmekapazität und Temperaturunterschiede des Objekts bei Übergang zwischen zwei verschiedenen Materialen, abgebildet werden. Eine Anpassung der Temperatur des virtuellen Objekts an die virtuelle Umgebung des Objektes ist ebenfalls möglich. Dadurch wird der Realitätseindruck verstärkt.

In Ausführungsformen der Erfindung ist das taktile Display und oder die Teilelemente befeuchtbar ausgebildet. Dabei können das taktile Display im Ganzen oder die einzelnen Teilelemente gezielt befeuchtbar ausgebildet sein. Dadurch kann dem Anwender ein Feuchteeindruck am Kollisionspunkt vermittelt werden.

In Ausführungsformen der Erfindung ist das deformierbare, mechanisch flexible taktile Display mit einem Deformationsmechanismus kombiniert. Dieser weist verschiedene Teilelemente auf, welche als zueinander veränderlich positionierbar ausgebildet sind. Die Lage der einzelnen Teilelemente kann dabei beispielsweise derart verändert werden, dass das taktile Display die Oberflächenform des Objektes oder einen Ausschnitt der Oberflächenform zur Interaktion mit dem Anwender in Echtzeit für die virtuelle Darstellung eines Objekts nachahmen kann.

In Ausführungsformen ist der Deformationsmechanismus derart ausgebildet, dass seine Teilelemente zueinander verkippbar sind.

In Ausführungsformen der Erfindung ist der Deformationsmechanismus derart ausgebildet, dass die Position der einzelnen Elemente durch einen Arretiermechanismus bzw. eine Reibungsänderung an deren Führung steuerbar ausgebildet sind. Diese Arretierung kann z.B. durch fluidische oder anderweitige Mechanismen an den Führungen einzelner Elemente erfolgen, die die Reibungseigenschaften der Führung verändern.

In Ausführungsformen kann die Arretierung durch eine Klemmung der Elemente in der Führung erfolgen, wobei eine Kraft F punktförmig oder als Flächenlast F/A über eine Fläche A auf das Stabelement wirkt. Die Kraft kann beispielsweise durch einen Unimorph oder Bimorph, durch einen Volumenaktor in einer Schmelz- oder Hydraulik- oder Pneumatiktasche, durch einen Piezo- oder Phasenwandler, die durch spezielle Strukturen unterstützt werden, z.B. wie durch Formunterstützung oder eine Oberfläche mit erhöhter Reibung. Dabei kann durch einen speziellen Querschnitt, der beispielsweise wannen- oder trapezförmig ausgeführt ist, die Kontaktoberfläche vergrößert werden. Bei elektrostatischer Arretierung bildet das Stabelement eine Elektrode und das Arretierungselement die zweite Elektrode, wobei zwischen beiden Elektroden eine Spannung angelegt wird. Beim Einsatz eines Phasenwandlers kann vorteilhaft ein schmelzbarer Stoff eingesetzt werden. Nach Aushärten ist die Konstruktion vibrationsstabil. In einer Ausführung mit einem elektrorheologischen bzw. magnetorheologischen Fluid kann die Reibung elektrisch bzw. magnetisch gesteuert werden.

In Ausführungsformen der Erfindung sind die Teilelemente des Deformationsmechanismus als Gelenkverbindungen ausgebildet. Diese können beispielsweise als Kugelgelenke ausgebildet sein, wodurch die Positionierung der Teilelemente zueinander in einfacher Weise einstellbar ist. In Ausgestaltungen dieser Ausführungsformen sind die Gelenke derart ausgebildet, dass diese bei Bedarf arretiert oder versteift werden können. Dadurch können harte Oberflächen besser simuliert werden, da durch die Versteifung die Elastizität des haptischen Elements verringert wird.

In Ausführungsformen der Erfindung sind die Teilelemente des Deformationsmechanismus derart ausgebildet, dass deren Dimensionierung durch Volumenzu- oder -abnahme veränderlich ausgebildet ist. Beispielsweise können die Zwischenelemente als quellfähige Elemente ausgebildet sein, die bei Kontakt mit einem Fluid aufquellen und infolgedessen eine Volumenzunahme erfahren. Dadurch erhöht sich der Abstand der das Zwischenelement umgebenden Teilelemente zueinander. Das Zwischenelement kann auch pneumatisch oder hydraulisch eine Volumenzu- oder -abnahme erfahren. Beispielsweise können die Teilelemente als Hydrogel ausgebildet sein, welches beispielsweise thermisch gesteuert eine Volumenzu- oder -abnahme erfährt. Die Volumenänderung und die daraus resultierende Größen- und/oder Formänderung der Teilelemente führt zu einer definierten Deformation des taktilen Displays.

In Ausführungsformen der Erfindung weist der Deformationsmechanismus des taktilen Displays ein Trägersubstrat auf, welches zur Aufnahme eines oder mehrerer aktorischer Elemente ausgebildet ist. Das Trägersubstrat kann dabei beispielsweise derart ausgebildet sein, dass das aktorische Element in X-Y-Richtung positionierbar ist. Insbesondere bei einer Mehrzahl von aktorischen Elementen ist über das Trägersubstrat eine definierte Positionierung der aktorischen Elemente möglich.

In Ausführungsformen der Erfindung ist der Deformationsmechanismus als aktorisches Element ausgebildet. Dabei kann das aktorische Element aus einer Vielzahl von aktorischen Teilelementen ausgebildet sein. Diese aktorischen Teilelemente können dabei beispielsweise ringförmig ausgebildet werden. Dadurch können beispielsweise kreisförmige Vertiefungen des Objekts abgebildet werden.

Wird die Bewegung der Linearaktoren auf Stützringe oder starre Stützstäbe übertragen und dienen diese als bewegliche Stützpunkte für eine biegsame Gestängekonstruktion, so können damit bestimmte Oberflächenstrukturen des Objektes abgebildet werden. Die Gestängekonstruktion kann wiederum als Träger für ein haptisches Display dienen.

In Ausführungsformen der Erfindung sind die aktorischen Teilelemente stangenförmig ausgebildet. Die stangenförmig ausgebildeten aktorischen Teilelemente sind dabei beispielsweise höhenverstellbar ausgebildet, sodass mittels der stangenförmig ausgebildeten aktorischen Teilelemente unterschiedliche Höhenpositionen in Z-Achsenrichtung eingestellt werden können. Eine beispielhafte Ausführung der stangenförmig ausgebildeten Teilelemente ist ein Stabkissen. Die stangenförmig ausgebildeten aktorischen Teilelemente können dabei einzeln ansteuerbar ausgebildet sein, wobei die Teilelemente pneumatisch oder magnetisch einstellbar ausgebildet sind. Alternativ können die stangenförmig ausgebildeten aktorischen Teilelemente auch mittels Linearantrieb einzeln gesteuert werden.

In Ausführungsformen der Erfindung ist das aktorische Element als Stabkissen derart ausgebildet, dass einzelne Stäbe matrixförmig angeordnet sind. Dabei können die Stäbe Teil eines translatorischen oder Linearaktors sein. Die Stäbe sind dabei vorzugsweise einzeln ansteuerbar. Die Fixierung der Stäbe in der Z-Richtung kann dabei pneumatisch, elektrostatisch, elektromagnetisch, piezoelektrisch oder magnetostriktiv erfolgen.

In Ausführungsformen der Erfindung sind die stangenförmigen aktorischen Teilelemente derart ausgebildet, dass die Positionierung der Teilelemente unter Nutzung der Gravitationskraft erfolgt. Dabei können die Teilelemente durch eine Vorrichtung beispielsweise entgegen der Gravitationskraft positioniert werden oder durch eine Krafteinwirkung entgegen der Gravitationskraft in der erforderlichen Position positioniert werden. Die Position bezeichnet dabei die Anordnung des stangenförmigen Elements in der Z-Richtung. Diese Feststellung der vertikalen Position erfolgt über einen Arretierungsmechanismus.

In Ausführungsformen der Erfindung werden die stangenförmigen aktorischen Teilelemente durch eine Halteplatte in Matrixstruktur gehalten und können sich in dieser Halteplatte in Z-Richtung bewegen oder darin arretiert werden.

In Ausführungsformen der Erfindung werden die stangenförmigen aktorischen Teilelemente in der Halteplatte durch ein Reibungselement oder ein nachgiebiges Element oder eine Kombination von einem nachgiebigen und einem Reibungselement in der vorgesehenen Position gehalten. Die Nachgiebigkeit und die Reibung werden entsprechend den Eigenschaften des abzubildenden Objekts eingestellt. Eine Druckkraft auf die stangenförmigen aktorischen Teilelemente, die bei Berührung derselben durch den Anwender entsteht, kann dann eine Verschiebung der stangenförmigen aktorischen Teilelemente hervorrufen, wobei sie sich durch die Nachgiebigkeit teilweise oder vollständig auch wieder in die Ausgangslage zurückbewegen können. Die Vorrichtung zur Arretierung kann dabei piezoelektrisch, magnetostriktiv, elektrodynamisch, elektrostatisch, elektromechanisch, elektromagnetisch, pneumatisch oder hydraulisch ausgebildet sein.

In Ausführungsformen der Erfindung werden die stangenförmigen aktorischen Teilelemente vor der Positionierung durch einen Rückstellmechanismus in eine definierte Ausgangsposition versetzt. Der Rückstellung kann zum Beispiel durch eine gerade Platte erfolgen (Rückstellplatte), die sich in Richtung der Halteplatte bis zum Erreichen der Rückstellposition bewegt. Die Formgebung kann dann durch eine Matrize, die je nach Seite der Formgebung als Positivform oder Negativform ausgeführt ist, erfolgen, wobei sich die Matrize relativ zu den stangenförmigen aktorischen Teilelementen in die Richtung entgegengesetzt zur Rückstellrichtung bewegt.

In Ausführungsformen der Erfindung ist die Matrize als erfindungsgemäßes Mehrkammersystem ausgebildet.

In Ausführungsformen der Erfindung liegen die stangenförmigen aktorischen Teilelemente auch nach erfolgter Positionierung während der Darstellung des Objektes an der Matrize an. Die Matrize realisiert dabei die bei einem Druck der Finger bzw. der Hand des Nutzers auf das darzustellende Objekt fühlbare Nachgiebigkeit und Reibung (derviskoelastischen Eigenschaften) des darzustellenden Objektes.

In Ausführungsformen der Erfindung erfolgt die Positionierung der stangenförmigen aktorischen Teilelemente mit Hilfe der Gravitationskraft oder einer anderen Kraft, indem sich die Rückstellplatte von der Halteplatte in Richtung der Gravitationskraft wegbewegt oder in Querrichtung geneigt sich in Querrichtung (seitlich) wegbewegt und die einzelnen stangenförmigen aktorischen Teilelemente beim Erreichen ihrer vorgesehenen Position gehalten oder arretiert werden.

In Ausführungsformen der Erfindung erfolgt die Positionierung der stangenförmigen aktorischen Teilelemente mit Hilfe der Gravitationskraft über eine Zeitsteuerung. Dazu werden alle stangenförmigen aktorischen Teilelemente bei der Rückstellposition fixiert, die Rückstellplatte so positioniert, und anschließend die Arretierung der stangenförmigen aktorischen Teilelemente einzeln oder gemeinsam gelöst. Wenn sich die einzelnen stangenförmigen aktorischen Teilelemente in Folge der Gravitationskraft bewegen, erfolgt ihre Arretierung oder Halterung nach Ablauf der Zeit, die sie benötigen, um ihre vorgesehene Position zu erreichen. In Ausführungsformen der Erfindung sind die stangenförmigen aktorischen Teilelemente derart ausgebildet, dass die Teilelemente zumindest teilweise elastisch verformbar sind. Beispielsweise können die Teilelemente federnde Teilbereiche aufweisen, welche eine Elastizität der Vorrichtung zur Verformung ermöglichen. Dabei kann es vorteilhaft sein, wenn die Elastizität der einzelnen aktorischen Teilelemente gezielt einstellbar ausgebildet ist.

In Ausführungsformen der Erfindung sind die stangenförmigen aktorischen Teilelemente gitterförmig angeordnet. Dabei können die Teilelemente eine Matrix ausbilden, bei der die einzelnen Teilelemente ansteuerbar ausgebildet sind. Dadurch können unterschiedliche Topographien des Objekts durch das haptische Element realisiert werden.

In Ausführungsformen der Erfindung liegen die stangenförmigen aktorischen Teilelemente seitlich aneinander an. Dabei können die Teilelemente eine Matrix ausbilden und werden beispielsweise mit Hilfe einer Matrize positioniert.

In Ausführungsformen der Erfindung ist das aktorische Element als eine Kombination ringförmiger Elemente und stangenförmig ausgebildeter Teilelemente ausgebildet. Dabei sind die stangenförmigen Teilelemente beispielsweise auf den ringförmigen Elementen angeordnet.

In Ausführungsformen der Erfindung ist die Vorrichtung zur Deformation als Mehrkammersystem ausgebildet. Dabei ist das Mehrkammersystem derart ausgebildet, dass es matrixförmig eine Vielzahl von Kammern eines definierten Volumens aufweist. Durch gezieltes Befüllen der Kammern kann dabei punktuell eine Volumenzunahme erzielt werden, wodurch unterschiedliche Höhenunterschiede in Z-Richtung generiert werden. Bevorzugt weist das Mehrkammersystem, neben einer Matrix in X-Y-Richtung, mindestens zwei, bevorzugt mehrere Lagen der definierten Kammern in Z-Richtung auf. Dadurch lassen sich in einfacher Weise punktuell Erhebungen in Z-Richtung generieren. Die Kammern werden dabei gezielt punktuell mit einem Fluidum (Flüssigkeit oder Gas) befüllt. Dadurch können komplexe Geometrien des Objektes abgebildet werden. In gleicher Weise ist es entsprechend dem Erfordernis der Darstellung des Objekts möglich, das Fluidum aus dem Mehrkammersystem zu entfemen. Das Mehrkammersystem steht danach nachfolgend für eine neue punktuelle Befüllung zur Verfügung.

In Ausführungsformen der Erfindung ist das Mehrkammersystem derart ausgebildet, dass die Kammern einzeln pneumatisch, fluidisch, hydraulisch und/oder mit granularen Materialien befüllbar ausgebildet ist.

Beispielsweise können mittels Mehrkammersystem komplexe Geometrien, wie Vertiefungen und Hohlräume dargestellt werden. Das Mehrkammersystem dient dabei vorzugsweise der Darstellung der komplexen Geometrien, während das haptische Element den haptischen Oberflächeneindruck des Objekts vermittelt. In Ausführungsformen der Erfindung sind die einzelnen Kammern der Mehrkammersystems unterschiedlich befüllt ausgebildet. Durch die unterschiedlichen Füllungen können gezielt einzelne haptische Oberflächengestaltungen des taktischen Displays eingestellt werden. Dabei können die verschieden gefüllten Kammern einzeln oder simultan angesteuert werden.

Durch die Eigenschaften des Materials der vertikalen und horizontalen Kammerwände kann zusammen mit dem Fülldruck und dem Füllstoff bzw. Gas die Kammernachgiebigkeit verändert werden. Damit können sowohl sehr weiche als auch harte Oberflächen abgebildet werden. In Ausführungsformen der Erfindung erfolgt die Nutzung von Vakuum zur Einstellung der Oberflächeneigenschaften. Dabei können beispielsweise in Kombination mit der Befüllung der einzelnen Kammer im Mehrkammersystem die Oberflächeneigenschaften eingestellt werden.

Durch eine Befüllung mit Flüssigkeiten oder Materialen, beispielsweise granularen Materialien, wie etwa Pulvern, deren Eigenschaften sich zum Beispiel elektrisch, magnetisch oder thermisch verändern lassen, zum Beispiel einer magnetorheologischen Flüssigkeit, können die fühlbaren haptischen Eigenschaften eines Objektes im Oberflächenbereich abgebildet werden.

In Ausführungsformen der Erfindung erfolgt eine Versteifung der Oberfläche des taktilen Displays. So kann beispielsweise über die gezielte Befüllung mit Flüssigkeiten eine Versteifung der Oberfläche des taktilen Displays realisiert werden.

In Ausführungsformen der Erfindung erfolgt eine Versteifung der Oberfläche des taktilen Displays mittels eines mechanischen Versteifungsmechanismus. Dieser kann beispielsweise platten- oder lamellenförmig ausgebildet sein.

In Ausführungsformen der Erfindung kann das taktile Display bereits entsprechend einer Objektgeometrie vorgeformt sein. Dies ist insbesondere für Anwendungsfälle geeignet, bei denen die Art und damit die ungefähre Größe und Form des virtuellen Objektes zum Beispiel durch die virtuelle Szenerie bereits vorher definiert ist. Mit Hilfe der Positionierungseinheit ist auch ein Wechsel des vordefinierten virtuellen Objektes möglich.

Bevorzugt erfolgen die Positionierung und die Verformung des haptischen Elements in Echtzeit. Das bedeutet, dass die real räumlich beabstandeten Anwender und Objekt im visuellen System virtuell in räumlicher Nähe dargestellt werden und dass sich das haptische Element bei der Kollision mit der Hand an dieser Stelle befindet und die Form des virtuellen Objekts angenommen hat.

### Gesamtsystem

Ein weiterer Aspekt der Erfindung betrifft ein System zur Interaktion mit virtuellen Objekten umfassend:
- zumindest eine erste Vorrichtung zur Erfassung von dreidimensionalen Daten zumindest eines Anwenders,
- eine Vorrichtung zur Erfassung von dreidimensionalen Daten zumindest eines Objektes,
- zumindest eine Datenverarbeitungseinrichtung zur Verarbeitung in Echtzeit der erfassten dreidimensionalen Daten des Anwenders und zur Generation einer visuellen Darstellung der dreidimensionalen Daten des Anwenders,
- eine Datenverarbeitungseinrichtung zur Verarbeitung in Echtzeit der erfassten dreidimensionalen Daten eines Objektes und zur Generation einer visuellen dreidimensionalen Darstellung des Objekts in Echtzeit,
- zumindest ein visuelles Subsystem mit einer Anzeigeeinrichtung zur visuellen und synchronisierten Darstellung der dreidimensionalen Daten mindestens des Objektes und des Anwenders und
- zumindest ein erfindungsgemäßes taktiles Displaysystem zur Interaktion mit dem Anwender.

Bevorzugt erfolgt die Erfassung der dreidimensionalen Daten des Anwenders von den Körperteilen, welche mit dem virtuellen Objekt interagieren sollen. Vorteilhaft wird dabei auch die Lage und die ausgeübte Kraft zwischen dem Körperteil des Anwenders und dem taktilen Displaysystem erfasst. Ergänzend können auch die dreidimensionalen Daten von Objekten, welche sich im Sichtfeld befinden, erfasst werden.

In Ausführungsformen der Erfindung sind akustische Einrichtungen vorhanden, die eine akustische Repräsentation des darzustellenden Objekts übermitteln.

In Ausführungsformen der Erfindung sind mehrere haptische Displaysysteme vorgesehen, die entsprechend den Bedürfnissen der Darstellung des virtuellen Objektes gewechselt werden können. So ist es beispielsweise denkbar, dass die haptischen Displaysysteme derart ausgebildet sind, dass diese Grundkörper für die Darstellung der virtuellen Objekte bilden. Derartige Grundkörper können dabei beispielweise komplexe Formen wie Hohlkörper oder Kugel- bzw. konkave oder konvexe Formen bilden. Zwischen diesen verschiedenen Displaysystemen kann entsprechend den Anforderungen an die haptische Darstellung ein Wechsel erfolgen, welcher durch eine Vorrichtung zum Wechseln der haptischen Displaysysteme realisiert wird.

Hinsichtlich der Echtzeit-Darstellung der dreidimensionalen Daten des Anwenders ist mindestens der mit dem Objekt interagierende Körperteil, z.B. die Hand, im visuellen System darzustellen, wobei das Körperteil wie bei einem Head-up-Display auch direkt sichtbar sein kann. Ideal werden alle Körperteile des Anwenders visuell dargestellt, die in dessen Sichtbereich liegen. Durch die synchronisierte Echtzeit-Kombination im visuellen Subsystem werden die real räumlich beabstandeten Anwender und Objekt virtuell in definierter räumlicher Nähe dargestellt. Der Anwender sieht also in dieser virtuellen Darstellung sich selbst das virtuelle Objekt berühren. Zum Kollisionszeitpunkt und im Kollisionspunkt interagiert er jedoch nicht wirklich mit dem im visuellen System dargestellten Objekt, sondern mit einem haptischen Displaysubsystem, dem Morphling, in einem taktilen Subsystem, welches in dem fühlbaren Abschnitt des virtuellen Objektes dessen haptische Eigenschaften, z.B. Oberflächenbeschaffenheit und Form, echtzeitsynchronisiert zur visuellen Darstellung anzeigt.

Die Darstellung der Interaktion des zumindest einen Körperteils des visualisierten Anwenders mit dem visualisierten Objekt im visuellen Subsystem erfolgt dabei simultan zur Interaktion des Anwenders mit dem taktilen Displaysystem, wobei bei Kollision des zumindest einen Teils des visualisierten Anwenders mit dem visualisierten Objekt ein Kollisionspunkt ermittelt wird. Die dreidimensionalen Daten des Objektes im Kollisionspunkt des zumindest einen Teils des visualisierten Anwenders mit dem visualisierten Objekt werden im taktilen Subsystem abgebildet, wobei das haptische Element eine Oberfläche mit einer Strukturierung aufweist, die derart ausgebildet ist, dass dieses die dreidimensionalen Struktur des Objektes im Kollisionspunkt basierend auf den erfassten dreidimensionalen Daten des Objektes zumindest im Bereich des Kollisionspunktes abbildet.

Ein weiterer Aspekt der Erfindung ist es, die freie Positionierung des virtuellen Objekts im Raum zu ermöglichen, welche durch die statische Ausgestaltung des visuellen Subsystems des Technikstandes (EP 2 827 224 A1) nicht möglich ist. Dies geschieht dadurch, dass das visuelle Subsystem erfindungsgemäß derart ausgebildet ist, dass es am Anwender angeordnet ist. Dadurch ist eine Mobilität des Anwenders sowie eine freie Orientierung im dargestellten virtuellen Raum gewährleistet. Im Gegensatz zu den bekannten statischen Displaylösungen wird damit eine freie Beweglichkeit sowohl des Anwenders als auch eine freie Platzierung des Objekts in der virtuellen Darstellung möglich. Beispielsweise kann das visuelle Subsystem als VR-Brille (Zeiss VR One, Zeiss AG, Oberkochen) oder VR-Headset (z.B. Oculus Rift, Oculus VR, LLC, Menlo Park, USA; Samsung Gear VR, Samsung Group, Seoul, Südkorea; HTC Vive, High Tech Computer Corporation, Taoyuan, Taiwan; LG 360 VR, LG Electronics, Seoul, Südkorea) ausgebildet sein. Bezüglich des geschilderten Systemaufbaus kommt als weitere erforderliche Systemfunktionalität die Echtzeit-Positionsbestimmung des Nutzerkopfes bzw. seines Sichtfeldes hinzu, welche mindestens die Kopfdrehung und -neigung sowie seine räumliche Position bezüglich des virtuellen Objektes umfasst. Diese Funktionen können bereits integraler Bestandteil der VR-Brillen bzw. des VR-Headsets sein.

Ausführungsformen der Erfindung umfassen weiterhin eine Vorrichtung zur Erfassung von dreidimensionalen Daten eines Objektes. Alternativ kann auch die Vorrichtung zur Erfassung der dreidimensionalen Daten des Anwenders derart ausgebildet sein, dass die Vorrichtung auch die dreidimensionalen Daten eines Objekts erfassen kann. Die erfassten dreidimensionalen Daten werden in der Datenverarbeitungseinrichtung verarbeitet und eine visuelle Darstellung des Objekts erzeugt.

In Ausführungsformen der Erfindung ist die erste und/oder zweite Vorrichtung zur Erfassung der dreidimensionalen Daten als nichtinvasive bildgebende Vorrichtung ausgebildet. Die Qualität der vom intermodalen 3D-Perzept-System, welches verschiedentlich auch als 4D-Display bezeichnet wird, dargestellten Information wird beispielsweise im klinischen Bereich nicht nur durch dessen Leistungsfähigkeit, sondern auch durch die Leistungsfähigkeit der bildgebenden Diagnostik bestimmt, welche die Rohdaten ermittelt. Dabei ist es auch denkbar, mehrere der bildgebenden Verfahren zu kombinieren. Beispielsweise sind im Magnetresonanztomographie-Bereich Hybridverfahren interessant, welche die Ergebnisse anderer Diagnoseverfahren in den intermodalen Informationsraum einbeziehen. So lassen sich z. B. Aussagen über die Aktivität der interessierenden Gehirnareale integrieren, welche mittels funktioneller Magnetresonanztomographie (fMRT) oder der Elektroenzephalografie (EEG) ermittelbar sind, während Aussagen über ihre Nervenfaser-Verbindungen aus Diffusionsuntersuchungen gewonnen werden können.

In Ausführungsformen der Erfindung ist die erste und/oder zweite Vorrichtung zur Erfassung der dreidimensionalen Daten ausgewählt aus einer Gruppe bestehend aus optischen Sensoren im IR-, VIS und UV-Bereich, CCD-Kameras, CMOS-Sensoren, Impedanzmessung, Sonographie, Magnetresonanztomographie, Szintigraphie, Positronen-Emissions-Tomographie, Single-Photon-Emissionscomputertomographie, Thermographie, Computertomographie, digitale Volumentomographie, Endoskopie oder optische Tomographie. Die Magnetresonanztomographie und Sonographie ermitteln neben den räumlichen Anordnungen auch Materialinformationen. So liefert die Sonografie im B-Mode Informationen zu anatomischen Details, im Doppler-Verfahren zu vaskulären Flüssen und mit dem Acoustic Radiation Force Impuls Imaging (ARFI) zu den mechanischen Gewebeeigenschaften. Vorteilhafterweise erlaubt das vorliegende System dem Anwender eine simultane Bereitstellung dieser Informationsdimensionen. Dies geschieht in einer Form, bei welcher er seine natürliche Nahfeldrekognitionsmethode, den kombinierten Seh-Tastvorgang, nutzen kann, so dass er die Informationen sofort und sehr präzise beurteilen kann, eben, als ob das Objekt tatsächlich vor ihm läge. Dabei werden Unterschiede, wie bestimmte Materialeigenschaften im visuellen Raum z.B. durch Falschfarbendarstellungen, Texturen und visuelle Kontraste dargestellt, im taktilen Bereich durch die Härte, Höhe, Texturen, Reliefs, Kanten und taktile Kontrastierungen wiedergegeben. Die zeitlich aufeinander abgestimmten visuellen und haptisch/taktilen Datenkanäle erzeugen dabei bei dem Nutzer die real anmutende Impression, dass das virtuelle Objekt tatsächlich vor ihm läge und durch Befühlen mit den Händen erkundbar wäre.

In Ausführungsformen der Erfindung umfasst das System weiterhin eine dritte Vorrichtung zur Erfassung von dreidimensionalen Daten eines Anwenders, wobei die dritte Vorrichtung zur Erfassung der Augenbewegung des Anwenders ausgebildet ist. Durch die dritte Vorrichtung erfolgt eine Verfolgung der Augenbewegung (Eye-Tracking), um die Blickrichtung des Anwenders zu bestimmen. Dies ist vorteilhaft, da das visuelle Subsystem auch eine Abbildung der näheren Umgebung wiedergeben soll. Dadurch wird der Realitätseindruck beim Anwender dahingehend verstärkt, dass der Unterschied zwischen virtueller Darstellung und realer Umgebung weitgehend aufgehoben wird, sodass das Perzept stärker als real interpretiert werden kann. Weiterhin kann durch die Verfolgung der Augenbewegung und der Ermittlung der Blickrichtung die hochauflösende visuelle Darstellung im visuellen Subsystem auf den Bereich beschränkt werden, der als Blickfeld durch den Anwender wahrgenommen wird. Angrenzende Bereiche, die dabei nur partiell oder peripher wahrgenommen werden, können dabei weniger detailliert dargestellt werden, wodurch der Rechenaufwand zur Berechnung der Darstellung verringert werden kann. Die Nutzung eines blickkontingenten Systems auf Basis eines Eye-Trackers bietet zudem dem Nutzer die Möglichkeit, mit den Augen bestimmte Zusatzfunktionen wie Zoom, Objektrotation u. ä. zu betätigen.

In einer weiteren Ausführungsform der Erfindung ist die dritte Vorrichtung ein ortsfestes System ausgewählt aus Pan-Tilt-System, Tilting-Mirror-System oder Fixed-Camera-System.

In Ausführungsformen der Erfindung ist das erfindungsgemäße System in einer reizarmen Umgebung angeordnet. Unter einer reizarmen Umgebung wird vorzugsweise ein Raum oder eine Kammer verstanden, bei der der Eintrag von Licht und akustischen Signalen gesteuert, vorzugsweise minimiert werden kann. Dadurch wird die Ausbildung des Gesamtperzepts unterstützt. Beispielsweise kann es vorteilhaft sein, wenn der Anwender das System, insbesondere jedoch das taktile Display vor der Anwendung nicht visuell wahrnehmen kann. Auch der Eintrag von Außengeräuschen kann bei der Ausbildung des Gesamtperzepts hinderlich sein, wenn diese zum Gegenstand des Perzepts nicht im Einklang stehen. Durch die Anordnung des Systems in der reizarmen Umgebung kann somit die Ausbildung des Gesamtperzepts vorteilhaft unterstützt werden.

Mit dem erfindungsgemäßen System oder auch der Einrichtung ist es somit möglich, Objekte fühlbar zu gestalten, welche normalerweise nicht oder nur schwer zugänglich sind.

Ein weiterer Aspekt der Erfindung betrifft ein Verfahren zur Interaktion mit virtuellen Objekten mit dem erfindungsgemäßen System umfassend die Schritte:
- Erfassen dreidimensionaler Daten mindestens eines Anwenders in Echtzeit,
- Erfassung der Bewegung und der Druckkräfte und/oder der verursachten mechanischen Spannungen des Anwenders im Kollisionspunkt,
- Verarbeitung der erfassten Daten der Bewegung und der Druckkräfte und/oder der verursachten mechanischen Spannungen,
- Erzeugung einer visuellen Echtzeit-Darstellung von zumindest einem Körperteil des Anwenders basierend auf den dreidimensionalen Daten des Anwenders,
- Erzeugung einer visuellen dreidimensionalen Echtzeit-Darstellung eines Objektes basierend auf den dreidimensionalen Daten des Objektes,
- synchronisierte Echtzeit-Darstellung der dreidimensionalen Daten des Objektes und des zumindest einen Körperteils des Anwenders in dem erfindungsgemäßen visuellen Subsystem, wobei die visualisierten dreidimensionalen Daten des Objekts mit den visualisierten dreidimensionalen Daten des Anwenders in der Anzeigeeinrichtung des visuellen Subsystems dargestellt werden,
wobei die Darstellung der Interaktion des zumindest einen Teils des visualisierten Anwenders mit dem visualisierten Objekt im visuellen Subsystem und simultane Interaktion des Anwenders mit einem taktilen Display des erfindungsgemäßen haptischen Displaysystem erfolgt, wobei bei Kollision des zumindest einen Teils des visualisierten Anwenders mit dem visualisierten Objekt ein Kollisionspunkt und die Druckkraft zwischen Anwender und Displaysystem ermittelt wird und die dreidimensionalen Daten des Objektes im Kollisionspunkt des zumindest einen Teils des visualisierten Anwenders mit dem visualisierten Objekt im haptischen Displaysystem abgebildet werden, wobei das haptische Displaysystem derart ausgebildet ist, dass dieses die dreidimensionale Struktur des Objektes im Kollisionspunkt basierend auf den dreidimensionalen Daten des Objektes zumindest im Bereich des Kollisionspunktes abbildet, wobei die erfassten Daten der Bewegung und der Druckkräfte des Anwenders eine lokale Anpassung der virtuellen Darstellung des Objektes sowie der visuellen Darstellung der Handbewegung im Bereich des aktiven Blickfelds steuern.

In Ausführungsformen der Erfindung wird das mindestens eine darzustellende Objekt in Echtzeit durch eine Vorrichtung zur Erfassung von dreidimensionalen Daten erfasst. Dadurch ist es beispielsweise möglich, dass der Anwender mit einem örtlich getrennten realen Objekt interagiert. Dabei werden die dreidimensionalen Daten des Objektes an einem ersten Ort erfasst und die dreidimensionalen Daten des Anwenders am zweiten Ort. Nachfolgend erfolgt die Generation der Darstellung des Objektes und des Anwenders im visuellen System. Weiterhin ist es dadurch auch möglich, sich bewegende Objekte zu erfassen und die Bewegung im visuellen und/oder taktilen Subsystem darzustellen.

In Ausführungsformen der Erfindung umfasst das Verfahren weiterhin die
- Erfassung der Augenbewegung des Anwenders,
- Verarbeitung der erfassten Daten der Augenbewegung und Bestimmung eines aktiven Blickfeldes des Anwenders,
- Implementierung der erfassten Daten der Augenbewegung und des aktiven Blickfelds in das visuelle Subsystem, wobei die erfassten Daten der Augenbewegung des Anwenders eine lokale Anpassung der visuellen Darstellung des Objektes sowie der visuellen Darstellung der Handbewegung im Bereich des aktiven Blickfelds steuern.

Ein weiterer Aspekt der Erfindung betrifft die Verwendung des erfindungsgemäßen Systems in einem erfindungsgemäßen Verfahren zur Interaktion mit virtuellen Objekten.

Die vorbenannten erfindungsgemäßen Ausführungsformen sind geeignet, die Aufgabe zu lösen. Dabei sind auch Kombinationen der offenbarten Ausführungsformen zur Lösung der Aufgabe geeignet. Bevorzugte Weiterbildungen der Erfindung ergeben sich aus den Kombinationen der Ansprüche oder einzelner Merkmale davon.

Nachfolgend soll die Erfindung anhand einiger Ausführungsbeispiele und der zugehörigen Figuren eingehender erläutert werden. Die Ausführungsbeispiele sollen die Erfindung beschreiben, ohne sich auf diese zu beschränken.

Es zeigen die
Fig. 1 eine schematische Darstellung eines haptischen Displaysystems sowie das Grundprinzip zur Vergegenständlichung virtueller dreidimensionaler Objekte, wobei Fig. 1a das vom Anwender anzufassende virtuelle dreidimensionale Objekt sowie den Berührbereich rund um den Kollisionspunkt, Fig. 1b den prinzipiellen Aufbau des haptischen Displaysystems und Fig. 1c dessen Teilvorrichtungen darstellt,
Fig. 2 eine schematische Darstellung einer weiteren Ausführungsform des Morphlings,
Fig. 3 eine schematische Darstellung einer Ausführungsform des Deformationsmechanismus mit schwenk- und drehbaren Linearantrieben,
Fig. 4 eine schematische Darstellung einer weiteren Ausführungsform eines Deformationsmechanismus mit stangenförmigen Antriebselementen, die matrixförmig zu einem Stabkissen angeordnet sind,
Fig. 5 a-g schematische Darstellungen verschiedener Arretierungen der stabförmigen Elemente,
Fig. 6 eine schematische Darstellung eines Deformationsmechanismus auf Basis fluidischer Expandierelemente,
Fig. 6a eine schematische Darstellung einer fluidischen Ventil-Beschaltung des Arrays aus fluidischen Expandierelementen,
Fig. 7 eine schematische Darstellung einer weiteren Ausgestaltung des taktilen Displaysystems mit einem fluidisch steuerbaren Mehrkammersystem,
Fig. 8 a-h schematische Darstellungen verschiedener Ausgestaltungen des taktilen Displaysystems und
Fig. 9 a-i schematische Darstellungen verschiedener Ausführungsbeispiele für die Kantendarstellung.

In einem ersten Ausführungsbeispiel wird in der Fig. 1 zunächst das Grundprinzip der Vergegenständlichung beliebiger virtueller dreidimensionaler Objekte verdeutlicht. In Fig. 1a ist das virtuelle dreidimensionale Objekt 1 schematisch dargestellt. Zur haptischen Darstellung des beliebigen virtuellen dreidimensionalen Objektes 1, etwa eines Kruges, sind, synchronisiert mit der visuellen Darstellung, nur dessen fühlbare haptischen Eigenschaften im Oberflächenabschnitt am Kollisionspunkt 2 bzw. Berührbereich wichtig. Nur diesen Abschnitt 2 wird der Nutzer z.B. mit seiner Hand 3 berühren. Der Morphling 4 stellt in Echtzeit die haptischen Gegebenheiten des virtuellen 3D-Objektes 1 für diesen Oberflächenabschnitt 2 dar. Wie Fig. **1b** und Fig. **1c** illustrieren, besteht der Morphling 4 dazu prinzipiell aus drei Funktionsgruppen, die untereinander und zum visuellen Subsystem synchronisiert arbeiten: (a) eine Positioniervorrichtung 5, welche eine taktile Displayeinheit 6 an die Position des fühlbar anzuzeigenden Oberflächensegmentes bzw. -ausschnittes 2 des virtuellen 3D-Objektes 1 im dreidimensionalen Raum platziert, (b) als Teil der taktilen Displayeinheit 6 ein deformierbares, formveränderliches taktiles Display 8, welches oberflächenbezogene fühlbare Eigenschaften wie Texturen, Konturen, Reliefs, Objektwärme, Feuchte anzeigt, und als weiteres Teilelement von 6 einen Deformationsmechanismus 7, der das deformierbare taktile Display 8 an die Form des anzuzeigenden Objekt-Oberflächensegmentes 2 des virtuellen 3D-Objektes 1 anpasst. Die Positioniervorrichtung 5 ist in dem in Fig. 1 dargestellten Ausführungsbeispiel als Roboterarm ausgeführt. Roboterarme haben einen großen Aktionsradius und sind sehr flexibel in ihrer Positionierung, sie können beispielsweise auch sehr große virtuelle Objekte haptisch repräsentieren. Der dargestellte Roboterarm ist an der Basis rotationsfähig. Mit den ersten beiden Drehgelenken kann im Aktionsradius jeder Raumpunkt angefahren werden. Das dritte Drehgelenk des Roboterarms ermöglicht das bedarfsgerechte Ausrichten der daran befindlichen taktilen Displayeinheit 6 in jede Raumlage. Bei ihrer Dimensionierung muss man die erforderliche maximal erlaubte Positionierzeit, die benötigte Positioniergenauigkeit und die am Roboterarm befindliche Masse der taktilen Displayeinheit 6 berücksichtigen. Die wenig kompakte Bauweise des Roboterarms lässt den Einbau von Schutzmechanismen geraten sein, um Quetschungen oder Ähnliches zu vermeiden. Schutzmechanismen können z.B. flexible Hüllen als Abdeckungen des Aktionsraumes oder auch entsprechende Druck-, Drehmoment- oder andere geeignete Sensoreinheiten sein.

Die taktile Displayeinheit 6 besteht aus dem taktilen Display 8 und einem Deformationsmechanismus 7. Das taktile Display 8 ist deformierbar bzw. mechanisch flexibel ausgeführt. Das Grundmaterial kann in einer Ausführungsform ein Elastomer sein. Der Deformationsmechanismus 7 besteht in **Fig. 1** aus stangenförmigen Linearantrieben, die an geeigneten Stellen des taktilen Displays 8 so angebracht sind, dass sie dieses in einem vorgegebenen Rahmen beliebig deformieren und damit jede Form des zu repräsentierenden Objektabschnittes 2 realisieren können.

Die **Fig. 2** zeigt in einem weiteren Ausführungsbeispiel eine weitere Ausführungsform des Morphlings 4. Dieser besteht aus einem X-Y-Positioniertisch 9, einem Hexapod 10, einem translatorischen Antriebselement 11, einem rotatorischen Antriebselement 12, einem Schwenkarm 13, einem weiteren translatorischen Antriebselement 14, dem Deformationsmechanismus 7 sowie dem taktilen Display 8. Die Elemente 9 bis 14 sind Teile der Positioniervorrichtung 5. Die Positionierung des vertikalen Aufbaus in der X-Y- Ebene erfolgt durch die entsprechende Positionierung der Positionierplattform 9c durch die Antriebe 9a und 9b, welche z.B. als Spindelantriebe ausgeführt sein können. Auf der Positionierplattform 9c befindet sich der weitere Aufbau beginnend mit dem Hexapod 10, welcher auf der Positionierplattform 9c mit der unteren Plattform 10a befestigt ist. Ein Hexapod ist eine spezielle Parallelkinematikvorrichtung, die über sechs Linearantriebselemente 10b verfügt. Dies erlaubt eine schnelle und sehr gut definierte Positionierung der oberen Plattform 10c in allen sechs Freiheitsgraden (drei translatorische und drei rotatorische). Auf der oberen Plattform 10c ist als nächstes ein translatorisches Antriebselement 11 platziert, welches größere lineare Positionierungen des oberhalb befindlichen Aufbaus realisieren kann. Das darauf befestigte rotatorische Antriebselement 12 kann den verbleibenden Kopfteil in alle Richtungen um 360 ° drehen. Der nun folgende Schwenkarm 13 kann die taktile Displayeinheit 6, umfassend 7 und 8, in ihrer Neigungslage positionieren, eine Feinpositionierung der Displayeinheit6 ist dann mit dem translatorischen Antriebselement 14 möglich.

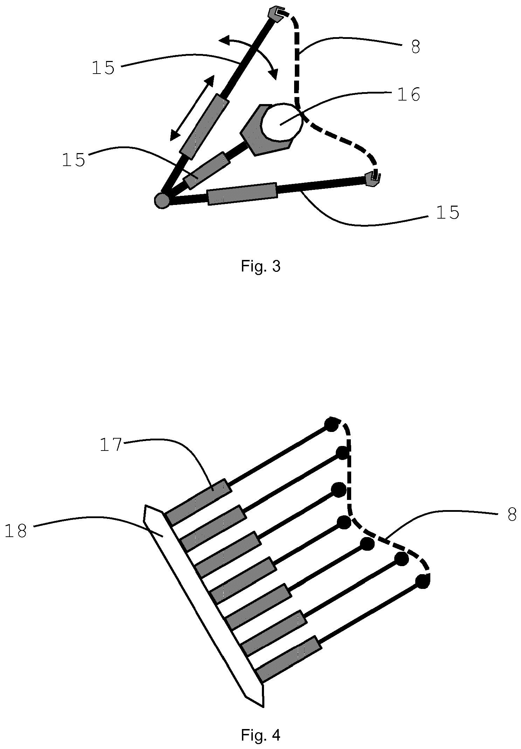

Die **Fig. 3** stellt ein weiteres Ausführungsbeispiel eines Deformationsmechanismus 7 für das deformierbare, taktile Display 8 dar. Der Deformationsmechanismus wird durch eine Anzahl von stangenförmigen linearen Antriebselementen 15 gebildet, die in ihrer Länge veränderlich sind. Zudem sind die Elemente 15 schwenk- und/oder drehbar so angeordnet, dass sie die flexible taktile Displayeinheit 6 nahezu beliebig formen, z.B. aufspannen, falten usw., können. Die stangenförmigen Antriebselemente können zumindest teilweise über Kopfelemente 16 verfügen, welche bestimmte haptische Oberflächeneigenschaften, z.B. Nachgiebigkeit bzw. Weichheit, bestimmte Geometrien, Konturen und Kanten, bereitstellen können, welche dann nicht separat durch das deformierbare taktile Display 8 repräsentiert werden müssen. Die Lage der einzelnen stangenförmigen linearen Antriebselemente 15 zueinander kann durch nicht näher dargestellte Antriebe, welche die erforderlichen Drehmomente bzw. kinematischen Bewegungen bereitstellen, definiert werden. Alternativ lässt sich dies auch durch ebenfalls nicht dargestellte quer zwischen den Elementen 15 angeordnete stangenförmige lineare Antriebselemente realisieren.

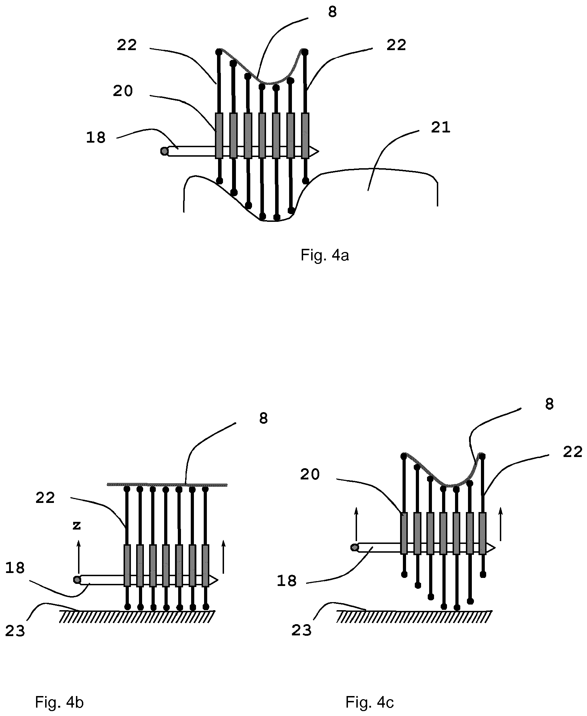

Die **Fig. 4** verdeutlicht ein Ausführungsbeispiel eines Deformationsmechanismus in Form arrayförmig angeordneter stabförmiger linearer Antriebselemente 17 nach Art von Stab- bzw. Stiftkissen. Die stabförmigen linearen Antriebselemente 17 sind derartig ausgeführt, dass sie lediglich in Z-Richtung wirken und damit ihre Höhe bezüglich der Halteplatte 18 verändern können. Die Halteplatte 18 ist im einfachsten Fall eine Lochplatte, wobei die Löcher Führungen für die stabförmigen Elemente 17 sind. Die stabförmigen Antriebselemente 17 können jeweils über einen eigenen Antriebsmechanismus verfügen, z.B. in Form von Formgedächtnisdrähten, Piezoaktoren oder einen fluidischen (fluidisch umfasst hydraulisch und pneumatisch) Mechanismus. Alternativ lassen sich die stabförmigen Elemente 17, wenn sie über keinen eigenen Aktuationsmechanismus verfügen, mit einer nicht dargestellten Beschreibapparatur in ihre jeweilig gewünschte Z-Position bringen. Ein derartiger Aktuationsmechanismus kann beispielsweise ein Zeilenschreiber sein. Dieser kann eine Zeile (z. B. X-Richtung) des Stabkissens gleichzeitig beschreiben, verfügt also geeigneterweise über die gleiche Anzahl an in Z-Richtung agierenden linearen Aktorelementen wie die zu positionierenden Stifte in einer Zeile und besitzt das gleiche Rastermaß. Durch Positionierung in Y-Richtung lassen sich so Zeile für Zeile die Stäbe 17 in ihre jeweilige Z-Position bringen. Eine Alternative zur Schreibzeile ist z.B. ein rotatorisches Element nach Art der Stiftwalzen, wie sie etwa in mechanischen Spieluhren zum Einsatz kommen.

In einem weiteren Ausführungsbeispiel des Deformationsmechanismus umschließt ein Feststellmechanismus (bzw. Arretierung) 20 die Stabelemente 22, deren Position durch eine Matrize (Positivform) 21 bestimmt wird. Zum Vorgang der Formgebung werden alle einzelnen Arretierungen 20 der Stabelemente 22 gelöst, so dass sie sich in Richtung Matrize 21 bewegen, auf diese aufschlagen, dann ihre Endposition annehmen und anschließend wieder mit dem Feststellmechanismus 20 arretiert werden. Die Bewegung kann durch die Schwerkraft, die auf die Stabelemente 22 wirkt, wenn sie entsprechend positioniert sind, hervorgerufen werden. Alternativ können die Stabelemente 22 nach einer Lockerung der Arretierung in einem Rücksetzvorgang durch die Relativbewegung zu einer nicht gezeichneten geraden Platte, die sich über den Stabelementen 22 befindet, in Richtung der Matrize 21 gedrückt werden, wobei sich die Matrize 21 so weit entfernt befindet, dass sie noch nicht wirksam wird. Nach diesem Rücksetzvorgang der Stabelemente werden die Stabelemente 22 durch eine Relativbewegung in Richtung der Matrize 21 an dieser ausgerichtet, wenn alle Stabelemente 22 die Matrize 21 berühren, wie in **Fig. 4a** dargestellt. Anschließend werden alle Stabelemente 22 mit dem Feststellmechanismus 20 arretiert. Alternativ kann die Formgebung auch durch eine Negativform erfolgen, die sich vor dem taktilen, deformierbaren Display 4 befindet.

In einem weiteren Ausführungsbeispiel des Deformationsmechanismus können die Stabelemente 22 einzeln oder in Gruppen arretiert werden. Zur Formgebung werden zuerst alle Stabelemente 22 gelöst und bis zum Erreichen der Rücksetzposition in Richtung einer geraden Gegenplatte 23 bewegt. In **Fig. 4b** ist die Rücksetzposition dargestellt. Anschließend bewegt sich die Halteplatte 18 in z-Richtung, wobei die jeweiligen Stabelemente 22 beim Erreichen ihrer vorgesehenen Position durch den Feststellmechanismus 20 arretiert werden (**Fig. 4c**).

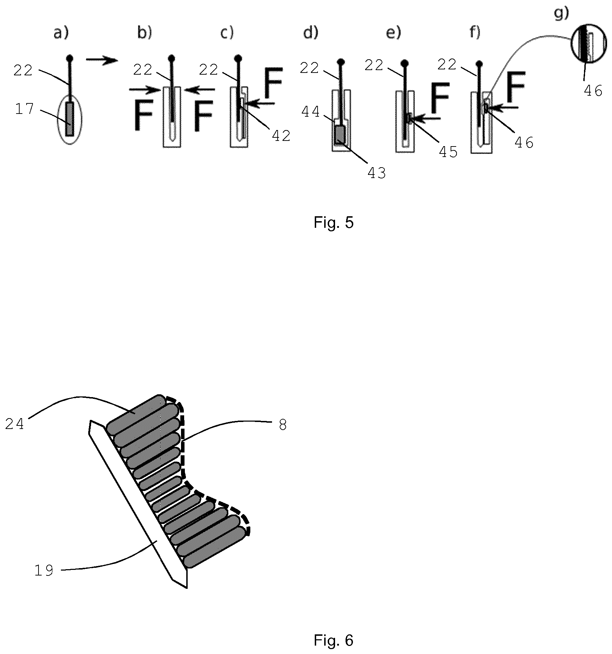

Die Arretierung der stabförmigen Elemente 17 nach dem Beschreibvorgang in der Halteplatte 18 (**Fig. 4**) kann z.B. durch fluidische oder anderweitige Mechanismen an den Führungslöchern der Haltplatte 18 erfolgen, die entweder die Reibungseigenschaften der Führung verändern oder die Stifte mechanisch z.B. durch Verklemmung arretieren, wie in **Fig. 5** für verschiedene Ausführungsformen dargestellt. In **Fig. 5a** enthält ein Linearaktor 17 oder eine Hydraulik- oder Pneumatikvorrichtung den Festhaltemechanismus, in **Fig. 5b** erfolgt die Arretierung durch Klemmung, wobei eine Kraft F punktförmig oder als Flächenlast F/A über eine Fläche A auf das Stabelement wirkt, in **Fig. 5c** durch einen Unimorph oder Bimorph 42, in **Fig. 5d** durch einen Volumenaktor (Arretierungselement) 43 in einer Schmelz- oder Hydraulik- oder Pneumatiktasche 44, in **Fig. 5e** durch einen Piezo- oder Phasenwandler 45, die in **Fig. 5f** durch spezielle Strukturen unterstützt werden, z.B. wie in **Fig. 5g** gezeigt durch Formunterstützung oder eine Oberfläche mit erhöhter Reibung 46. Dabei kann durch einen nicht näher dargestellten Querschnitt des Stabelementes 22, der beispielsweise wannen- oder trapezförmig ausgeführt ist, die Kontaktoberfläche vergrößert werden. Bei elektrostatischer Arretierung bildet das Stabelement 22 eine Elektrode und das Arretierungselement die zweite Elektrode, wobei zwischen beiden Elektroden eine Spannung angelegt wird. Beim Einsatz eines Phasenwandlers in **Fig 5e** kann vorteilhaft ein schmelzbarer Stoff eingesetzt werden. Nach Aushärten ist die Konstruktion vibrationsstabil. In einer Ausführung mit einem elektrorheologischen bzw. magnetorheologischen Fluid kann die Reibung elektrisch bzw. magnetisch gesteuert werden.

Das Rastermaß umfassend den Durchmesser der stabförmigen linearen Antriebselemente 17 und deren Abstand untereinander ist wichtig für die haptisch vermittelbare Information. Je kleiner das Rastermaß ist, umso höher ortsaufgelöste taktile Information ist darstellbar. Stabkissen eignen sich hervorragend zum Darstellen von Reliefs, Profilen, Konturen sowie Kanten. Sind die Elemente 17 schwingungsleitend ausgeführt, so kann mit ihnen gleichzeitig in Funktionenintegration auch eine vibrotaktile Displayfunktionalität realisiert werden, was im Extremfall erlauben würde, auf die separate Ausführung des deformierbaren taktilen Displays 8 zu verzichten. Alternativ können die einzelnen stabförmigen linearen Antriebselemente in ihrem Kopfbereich Effektoren tragen, welche die vibrotaktile Funktionalität realisieren. Natürlich kann sich über den Elementen 17 auch ein deformierbares taktiles Display 8 befinden, welches die erforderlichen, z.B. vibrotaktilen, Funktionalitäten bereitstellt.

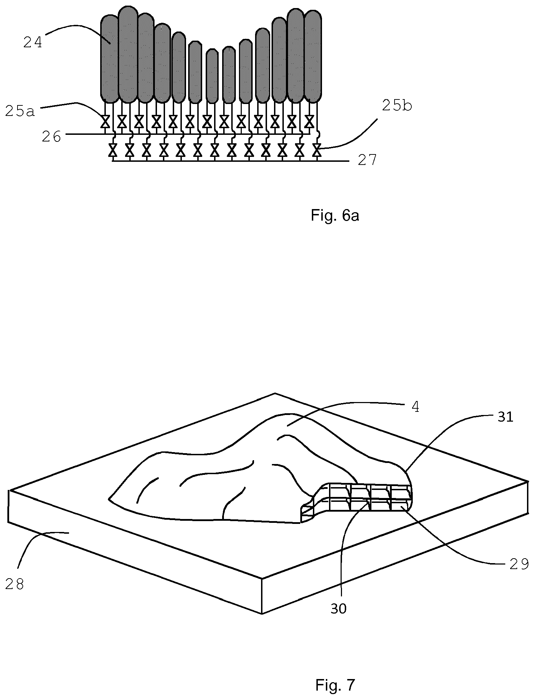

Die **Fig. 6** zeigt ein Ausführungsbeispiel eines Deformationsmechanismus auf Basis fluidischer Expandierelemente 24. Das Wirkprinzip ist analog zum Stabkissen. Die fluidischen (hydraulischen oder pneumatischen) Expandierelemente 24 wirken jeweils in Z-Richtung und können so ebenfalls sehr vielseitig und leistungsfähig Konturen, Profile, Reliefs und Kanten darstellen. In einer einfachen Ausführung sind die fluidischen Expandierelemente ZylinderKolben-Anordnungen. Alternativ eignen sich flexible Anordnungen für die Expandierelemente 24. Ein entsprechendes Ausführungsbeispiel ist ein McKibben-Element, bei dem die fluidisch füllbare Hülle aus einem flexiblen Gewebe besteht. Im Ausgangszustand ist das McKibben-Element entsprechend der Gewebe- bzw. Faserlängen gestreckt. Appliziert man einen Überdruck, kommt es zu einer Expansion des Elementes in radialer Richtung und infolge der nicht dehnbaren Hüllen-Gewebefasern effektiv zu einer Elementkontraktion in Z-Richtung. Eine weitere Ausführungsform ist das Faltenbalg-Element. Dieses ist ähnlich einer Ziehharmonika gestaltet und kann eine zylindrische oder anderweitige Form besitzen. Bei Druckzunahme im Inneren des Faltenbalg-Elementes dehnt dieses sich nur axial entlang der Z-Achse aus, während keine nennenswerte radiale Verformung stattfindet. Eine weitere Ausführungsform des fluidischen Expandierelementes 24 kann ein Element mit elastischer Hülle sein. Bei Druckzunahme dehnt sich dieses wie ein Ballon radial und axial aus. Die axiale Ausdehnung kann formschlüssig unterbunden werden. In diesem Fall eigenen sich auch Aufbauten, bei denen eine Druckkammer mit einer elastischen Membran abgedeckt ist, die durch eine Druckzunahme in Z-Richtung ausgelenkt wird.

Die **Fig. 6a** stellt ein Ausführungsbeispiel einer fluidischen Ventil-Beschaltung eines Arrays aus fluidischen Expandierelementen 24 dar. Jedes fluidische Expandierelement 24 besitzt ein eingangsseitiges Ventil 25a, welches mit dem fluidischen Eingang 26 verbunden ist, welcher mit einem Überdruck beaufschlagt ist, und ein ausgangsseitiges Ventil 25b, welches mit dem fluidischen Ausgang 27 verbunden ist, welcher als fluidische Masse fungiert, also keinen Überdruck aufweist. Zum Betätigen des fluidischen Expandierelementes 24 ist das Eingangsventil 25a zu öffnen, während das ausgangsseitige Ventil 25b geschlossen ist. Wenn das Expandierelement entsprechend seines Innendruckes seine vorgesehene Z-Position erreicht hat, wird das eingangsseitige Ventil 25a geschlossen und das Element 24 verbleibt in seinen Expansionszustand. Zum Verkleinern der Z-Expansion wird das ausgangsseitige Ventil 25b solange geöffnet, bis der erforderliche verringerte Innendruck der neuen Z-Expansion erreicht wird. Bei großen Arrays mit sehr vielen Expansionselementen kann die Ventilanzahl sehr groß werden. Durch Nutzung eines fluidischen Zeilen-Spalten- Multiplexers [T. Thorsen, S.J. Maerkl, S.R. Quake, Microfluidic large-scale integration, Science 298 (2002), 580-584] lässt sich die Anzahl der zur Steuerung erforderlichen Schaltventile stark reduzieren. In einer weiteren, nicht näher dargestellten Ausführungsform können die fluidischen Expansionselemente 24 mit nur einem einzigen Ventil 25 und nur einer einzigen Steuerleitung angesteuert werden. Dazu benötigt man einen alternierenden Steuerdruck. Bei ansteigendem Steuerdruck wird das Ventil genau dann geschlossen, wenn das Expansionselement 24 seine vorgesehene Z-Expansionsposition erreicht hat. Umgekehrt muss für eine Elementekontraktion gewartet werden, bis der Steuerleitungsdruck auf das erforderliche Niveau abgefallen ist, bevor das zuvor geöffnete Ventil wieder geschlossen werden kann.

Fig. 7 zeigt ein Ausführungsbeispiel des taktilen Displaysystems 4 bestehend aus einer Vorrichtung mit einem fluidisch steuerbaren Mehrkammersystem. Der Morphling 4 befindet sich auf einer Trägerplatte 28. Er besteht aus einer Vielzahl fluidischer Kammern 29, welche einzeln oder auch im Kompartiment pneumatisch oder fluidisch durch Applizierung eines Überdruckes expandiert bzw. durch Abbau des Überdruckes kontraktiert werden können. Die fluidischen Kammern 29 besitzen flexible Kammerwände 30 und können beispielsweise quadratisch, rechteckig, hexagonal oder zylindrisch ausgeführt sein und sowohl horizontal, als auch vertikal gestapelt sein. Die Kammerwände 30 können entweder mechanisch deformierbar, insbesondere biegbar sein, aber nicht dehnbar. Damit kann man durch entsprechende Druckapplikation mechanisch sehr stabile Objekte repräsentieren, ist allerdings bezüglich Größe und Form des virtuellen Objektes etwas limitiert. Sind die Kammerwände nicht nur mechanisch flexibel, sondern auch dehnbar, sind die Freiheitsgrade bei Größe und Form des darzustellenden virtuellen Objektes vergleichsweise größer. Dies kann unter Umständen zu Lasten der Festigkeit des haptischen Displaysystems (Morphlings) 4 gehen. Die Expansionsrichtung der fluidischen Kammern 29 kann allseitig sein. In anderen Ausführungsformen ist die Expansionsrichtung der fluidischen Kammern 29 gerichtet. Einige Kammern 29 können beispielsweise bevorzugt in der X-Y-Ebene expandieren, andere hauptsächlich in die Z-Richtung. Eine spezifische Gestaltung des Aufbaus des Mehrkammersystems aus fluidischen Kammern 29 mit jeweils speziell definierten Expansionsrichtungen ist insbesondere bei Morphlingen 4 empfehlenswert, die in Display-Systemen, welche für spezifische Anwendungsszenarien konzipiert sind, integriert sind. Derartige Anwendungsszenarien, etwa in der Bildgebenden Diagnostik und minimalinvasiven Chirurgie, bedürfen lediglich der Darstellung spezifischer Objektgruppen, etwa Organe oder andere anatomische Körperteile. In der Gehirnchirurgie ist es etwa empfehlenswert, Morphlinge zu realisieren, welche die Anatomie des Gehirns bzw. von Teilen des Gehirns durch ihre spezifische Gestaltung detailliert repräsentieren können. Für Untersuchungen in der Bauchhöhle wiederum sind vorgeformte bzw. funktionalisierte Morphlinge 4 geeignet, welche für die Anatomie bestimmter Organe, z.B. der Leber, des Darmes oder des Magens, spezifisch sind. In Ausführungsformen ist es möglich, dass ein 4D-Display-System mehrere verschiedene Morphlinge, für die Organdarstellung im Bauchbereich z.B. für jedes Organ wie Leber, Darm, Magen, Niere, Gebärmutter, Lymphknoten einzelne Morphlinge, umfasst.

Durch eine geschickte Kombination und Ansteuerung der Vielzahl von fluidischen Kammern 29 können in anderen Ausführungsformen virtuelle Objekte bzw. deren Oberflächenabschnitte in einer großen Form- sowie Größenvielfalt durch den Morphling 4 taktil dargestellt werden. Diese Ausführungsform des Mehrkammersystems weist eine hohe Funktionenintegration auf. Sie vereint die Funktionen des Deformationsmechanismus, des taktilen, deformierbaren Displays und, zumindest für virtuelle Objekte mit geeigneter Form, der Vorrichtung zur Positionierung. Der Aufbau kann allerdings auch an einer Vorrichtung zur Positionierung 5 befestigt sein und umfasst dann lediglich die Funktionen des Deformationsmechanismus und des deformierbaren taktilen Displays.

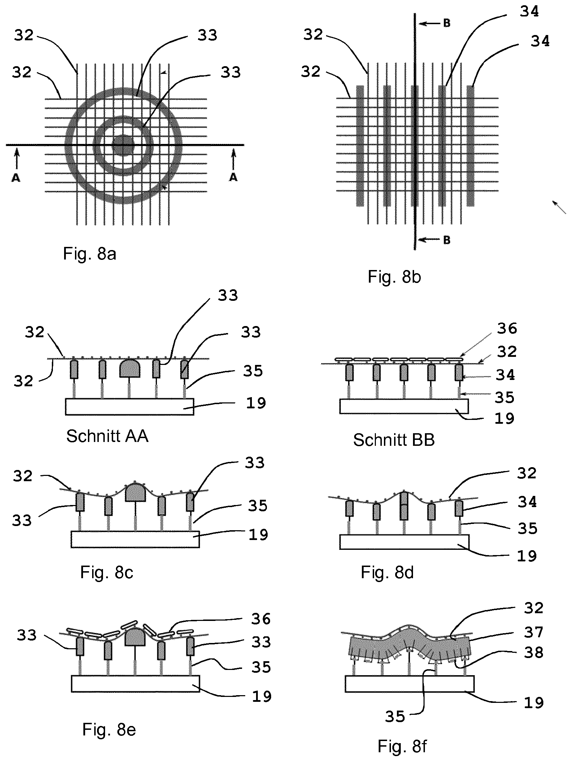

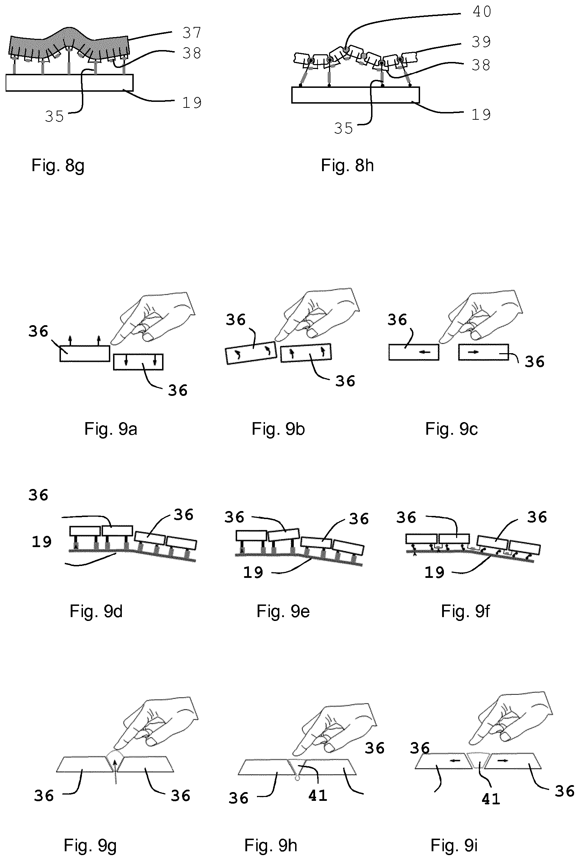

Die Fig. 8 zeigt eine Ausführungsform des haptischen Displaysystems (Morphlings) 4 bestehend aus einer flexiblen mechanischen Konstruktion mit flexiblen Biegestäben bzw. Biegebalken 32, die, wie in **Fig. 8a** dargestellt, durch feste Stützringe 33 mit unterschiedlichem Durchmesser und in **Fig. 8b** durch starre Stützstäbe 34 gehalten werden. Das flexible Stab-Netz soll eine ausreichende Festigkeit und Formbeständigkeit bieten. Die Stützringe 33 und Stützstäbe 34 sind über Linearaktoren 35 mit einer Trägerplatte 19 verbunden, so dass über die Aktoren 35 der Abstand zwischen dem Befestigungspunkt von Aktor 35 und Stützring 33 bzw. Stützstab 34 individuell variiert werden kann. Je Stützring 33 sind drei Aktoren 35 empfehlenswert, die beispielsweise im Abstand von je einem Drittel des Ringumfanges angeordnet werden, und je Stützstab 34 zwei Aktoren 35. Je näher die zwei Aktoren 35 eines Stützstabes 34 zueinander angeordnet werden, umso größer ist die Hebelwirkung. **Fig. 8c** zeigt das Schnittbild AA und **Fig. 8d** das Schnittbild BB mit jeweils verschiedenen Auslenkungen der Aktoren 35. Eine Anordnung von Stützstäben 34 in mehreren Richtungen (z.B. X- und Y-Richtung) ist möglich und vorteilhaft einsetzbar. In **Fig. 8b** sind die Stützstäbe 34 nur in einer Richtung dargestellt.

In Schnittbild BB und in **Fig. 8e** trägt die flexible Stabkonstruktion starre taktile Displayelemente 36.

In einem Ausführungsbeispiel wird statt der Stützringe 33 oder Stützstäbe 34 eine elastomechanische Schicht 37 verwendet, welche zwar biegsam ist, jedoch eine gleichmäßige Form annimmt und gleichzeitig die Stabilität für geeignete vibrotaktile Oberflächenausgabe besitzt. Sie kann ein Array lokaler Aktoren 38 enthalten, die eine zusätzliche lokale Verformung herstellen. Die lokalen Aktoren 38 können die vertikale aktorische Verformung unterstützen oder ersetzen, wie in **Fig. 8g** dargestellt.

In einem Ausführungsbeispiel nach **Fig. 8h** wird die 3D-Stützstruktur durch Oberflächenelemente (Glieder) 39 gebildet, die über Gelenke 40 miteinander verbunden sind. Um Kugeloberflächen darzustellen, ist eine Ausgestaltung der Glieder 39 mit Federelementen vorteilhaft. Die Verbindung der Glieder 39 kann z. B. mittels Seilzüge erfolgen, die durch Löcher in den Elementen gezogen sind.

Die **Fig. 9** zeigt verschiedene Ausführungsbeispiele für die fühlbare Kantendarstellung: **Fig. 9a****-f** zeigt dafür eine Struktur, die sich auf den Kacheln 36 befindet und ändert und **Fig. 9g****-i** dafür gestaltete Kachelzwischenräume. Drei Ausgestaltungsvarianten sind grafisch dargestellt. **Fig. 9a** und **Fig. 9d** zeigen eine Kantenentstehung bzw. -abbildung durch Verschiebung, **Fig. 9b** und **Fig. 9e** eine Kantenentstehung durch Rotation bzw. Verkippung, und **Fig. 9c** sowie **Fig. 9f** eine Kantenentstehung durch Abstandsvergrößerung. **Fig. 9g** illustriert eine fühlbare Kantenanzeige durch ein Zwischenraumfluid 41, z.B. eine magnetorheologische Flüssigkeit. Die Härte, viskose Eigenschaften bzw. der Reibungskoeffizient in den Zwischenräumen werden variiert, die haptischen Elemente 36 (Kacheln) sind zur Erzeugung von elektrischen oder magnetischen Feldern geeignet. Dadurch wird das Volumen des Zwischenraums verändert, wodurch dieser hervorgehoben oder abgesenkt wird. Bei Gasen wird dazu entsprechend beispielsweise die Temperatur verändert. **Fig. 9h** zeigt eine Kantenkurvaturänderung durch Volumenanpassung des Volumenkörpers, während **Fig. 9i** die Kantenkurvaturänderung durch Zwischenraumänderung darstellt. Bei dieser Variante wird der Abstand bzw. die Lage der Kacheln 36 variiert und dadurch teilweise oder vollständig das eingeschlossene Fluid (Luft, Flüssigkeit) hervorgehoben oder abgesenkt.

Die Einbeziehung der berührungsbasierten, physikalischen Interaktion mit vergegenständlichten virtuellen dreidimensionalen Objekten bietet den Technologien der virtuellen Realität komplett neue Möglichkeiten. Einerseits ist dabei eine Nutzerimmersion in virtuelle Welten derart möglich, dass er diese praktisch nicht mehr von der realen Welt unterscheiden kann. Andererseits ermöglicht unser System komplett neue Ansätze in der Simulation und Präsentation von Gegenständen. Stellvertretend für viele weitere denkbare Anwendungen werden nachfolgend einige Beispiele beschrieben.

Die bildgebende Diagnostik, zum Beispiel die Impedanzmessung, Sonographie, Magnetresonanztomographie, Szintigraphie, Positronen-Emissions-Tomographie, Einzel-Photon-Emissionscomputertomographie, Thermographie, Computertomographie, digitale Volumentomographie, Elektro-Enzephalographie, aber auch optische Verfahren, ermitteln typischerweise dreidimensionale Daten bestimmter Eigenschaften des untersuchten Körpers mit hoher Ortsauflösung. Dies können u.a. dessen Dichte, Wasseranteil, Gegenwart bestimmter Stoffe wie Marker, Elektroaktivität sein. Ausgegeben werden die ermittelten Daten gegenwärtig vorwiegend mit einer visuellen Falschfarben-2D- oder -3D-Darstellung. Die Auswertung erfordert deshalb typischerweise Expertenwissen und kann deshalb nicht intuitiv und in Echtzeit erfolgen. Das erfindungsgemäße 4-D-Displaysystem mit den erfindungsgemäßen Morphlingen ermöglicht durch die Vergegenständlichung der Organe oder zumindest von deren Ausschnitten deren intuitive Rekognition mit dem Tastsinn, so wie es der Mediziner in seinem Studium für die konventionelle Operation gelernt hat, ohne die Notwendigkeit, den Körper tatsächlich öffnen zu müssen. Denn bei der konventionellen Operation am offenen Patienten sowie mit dem 4D-Display wird das Gewebe nach mechanischen Eigenschaften befühlt, sodass z.B. Verhärtungen leicht, sicher, gut lokalisiert, intuitiv und in Echtzeit feststellbar sind.

Bei der minimalinvasiven Chirurgie in Kombination mit perioperativer bildgebender Diagnostik werden die Vorteile der konventionellen Operation am offenen Patienten mit den Vorteilen der minimalinvasiven Chirurgie kombiniert. Der Chirurg kann die durch die bildgebende Diagnostik ermittelten und in Echtzeit ausgegebenen Daten als vergegenständlichtes Organ sehen und mit seinen Händen befühlen, sodass er intuitiv und unmittelbar das Operationsfeld erkunden und sofort die entsprechende chirurgische oder anderweitige Therapie durchführen bzw. einleiten kann. Sind die Steuerelemente der minimalinvasiven Werkzeuge mit den vergegenständlichten virtuellen Objekten koordiniert, ist es möglich, die Operation auch direkt am virtuellen, vergegenständlichten Objekt durchzuführen. Vorteilhaft ist, dass man Zoom-Funktionen, ein Hineingreifen in die Organe und andere Dinge, die durch die elektronische Datenverarbeitung und spezielle Datenpräsentation möglich werden, nutzen kann, was Diagnostik und Therapie erheblich erleichtern kann. Darüber hinaus sind nun auch Organe durch Befühlen zugänglich, wo dies in Realität strikt zu unterlassen ist, etwa beim Gehirn.

Mit der erfindungsgemäßen 4D-Display-Technologie lassen sich auch virtuelle Objektbibliotheken realisieren, sodass etwa Tier- und Organpräparate obsolet werden, Operationsbefunde im digitalisierten Zustand Studenten und anderen Interessierten sofort und ohne die Notwendigkeit realer Präparate präsentierbar sind, sehr seltene oder teure Gegenstände wie Kunstwerke einer großen Allgemeinheit z.B. in Museen zugänglich werden oder auch die Haptik von Objekten im Entwurfsprozess ohne die Notwendigkeit von deren gegenständlicher Realisierung simulierbar und damit untersuchbar ist. Diese Möglichkeit der Simulation real existierender oder auch denkbarer Objekte in Form der Vergegenständlichung virtueller dreidimensionaler Objekte gibt dem Entwurfsprozess völlig neue Möglichkeiten, aber auch der Präsentation von Ergebnissen oder wählbaren Ausstattungsmerkmalen im innerbetrieblichen Bereich sowie bei Kunden, denn nun ist die Vermittlung eines Gesamteindruckes möglich.

Die erfindungsgemäße 4D-Display-Technologie kann auch den Online-Einkauf drastisch verändern. Nun hat der Kunde die Möglichkeit, bequem von zu Hause aus die Haptik von Bekleidungsstücken, Möbelgamituren oder etwa Autositzbezügen zu begutachten und so fundiertere Kaufentscheidungen zu fällen.

Auch das Cinema kann von dem erfindungsgemäßen 4D-Display-System bedeutend profitieren. Sind bei normalen 3D-Fimen die Zuschauer noch in einer passiven Rolle, so stehen sie in der aktuellen Virtuellen Realität mitten drin und können sich nach überall hin umschauen. Sie können also an Orten sein, wo sie normalerweise nicht hinkommen. Mit der erfindungsgemäßen 4D-Display-Technologie kann man die virtuellen Gegenstände bzw. die virtuelle Umwelt nicht nur sehen, sondern auch anfassen. Im "Jurassic Park" etwa können die Dinosaurier nicht nur angesehen, sondern auch berührt werden.

Die Immersion in virtuelle Welten eines Nutzers unter Einbeziehung des visuellen, auditiven und des kompletten taktilen Datenkanals ermöglicht für den Anwender die Realisierung eines Gesamtperzepts, sodass er die virtuelle nicht mehr von der realen Welt unterscheiden kann. Damit lassen sich Computerspiele mit komplett neuen Möglichkeiten auf Basis komplett neuer Methoden realisieren. Auch der Bezug zu Gegenständen oder auch Partnern in sozialen Netzwerken lässt sich auf ein neues Fundament stellen. Schließlich können Partner über weite Entfernungen auch körperlich miteinander in Interaktion treten, dies ist auch mit rein virtuellen Partnern möglich.

### Bezugszeichen

- 1: Virtuelles dreidimensionales Objekt
- 2: Objektabschnitt am Kollisionspunkt
- 3: Nutzerhand
- 4: haptisches Displaysystem, Morphling
- 5: Vorrichtung zur Positionierung
- 6: Taktile Displayeinheit
- 7: Deformationsmechanismus
- 8: Deformierbares taktiles Display
- 9: X-Y-Positioniertisch
- 9a: Antrieb der X-Achse
- 9b: Antrieb der Antrieb der Y-Achse
- 9c: Positionierplattform
- 10: Hexapod
- 10a: Untere Plattform
- 10b: Antriebselement
- 10c: Obere, positionierte Plattform
- 11: Translatorisches Antriebselement
- 12: Rotatorisches Antriebselement
- 13: Schwenkarm
- 14: Translatorisches Antriebselement
- 15: Stabförmiges lineares Antriebselement
- 16: Kopfelement
- 17: Stabförmiges lineares Antriebselement
- 18: Halteplatte
- 19: Trägerplatte
- 20: Feststellmechanismus
- 21: Matrize (Positivform)
- 22: Stabelement
- 23: Rückstellplatte
- 24: Fluidisches Expandierelement
- 25: Ventil
- 25a: Eingangsseitiges Ventil
- 25b: Ausgangsseitiges Ventil
- 26: Fluidischer Eingang
- 27: Fluidischer Ausgang
- 28: Trägerplatte
- 29: Fluidische Kammern
- 30: Kammerwand
- 31: Oberfläche, taktiles Display
- 32: Biegestab
- 33: Stützring
- 34: Stützstab
- 35: Stabförmiges lineares Antriebselement
- 36: Taktiles Displayelement
- 37: Elastomechanische Schicht
- 38: Aktor zur lokalen Stützstrukturverformung
- 39: Oberflächenelement
- 40: Gelenk
- 41: Volumenkörper
- 42: Unimorph oder Bimorph
- 43: Arretierungselement
- 44: Schmelz- oder Hydraulik- oder Pneumatiktasche
- 45: Piezo- oder Phasenwandler
- 46: Oberfläche mit Verzahnung oder erhöhter Reibung

## Patentansprüche

1. Haptisches Displaysystem (4), umfassend:
- ein deformierbares, formveränderliches taktiles Display (8), welches oberflächenbezogene fühlbare Eigenschaften vermittelt,
- einen Deformationsmechanismus (7), der das deformierbare taktile Display (8) an die Form des anzuzeigenden Objekt-Oberflächensegmentes (2) anpasst, wobei der Deformationsmechanismus (7) verschiedene Teilelemente (15, 17, 22, 24, 33, 34) aufweist, welche als zueinander veränderlich positionierbar ausgebildet sind,
**dadurch gekennzeichnet, dass** das haptische Displaysystem (4) des Weiteren eine Positioniervorrichtung (5) aufweist, welche das taktile Display (8) lagerichtig an die Position des fühlbar anzuzeigenden Oberflächensegmentes bzw. -ausschnittes (2) eines virtuellen 3D-Objektes (1) im dreidimensionalen Raum platziert.

2. Haptisches Displaysystem (4) nach Anspruch 1, **dadurch gekennzeichnet, dass** die Vorrichtung (5) zur Positionierung im dreidimensionalen Raum des haptischen Displaysystems (4) als Roboterarm, Delta-Robot, Hexapod (10), Mehrachsensystem oder Kammersystem ausgebildet ist.

3. Haptisches Displaysystem (4) nach Anspruch 1 oder 2, **dadurch gekennzeichnet, dass** das taktile Display (8) eine Segmentierung bzw. Unterteilung in mehrere Elemente (36) aufweist, die in ihrem Verhalten unabhängig voneinander steuerbar ausgebildet sind.

4. Haptisches Displaysystem (4) nach einem der Ansprüche 1 bis 3, **dadurch gekennzeichnet, dass** das haptische Displaysystem (4) zumindest eine Vorrichtung zur Erzeugung von Schwingung aufweist, welche im taktilen Display (8) oder in einzelnen Teilelementen des taktilen Displays (8) eine fühlbare Vibration erzeugt.

5. Haptisches Displaysystem (4) nach einem der Ansprüche 1 bis 4, **dadurch gekennzeichnet, dass** das haptische Displaysystem (4) statische Displays (8) umfasst.

6. Haptisches Displaysystem (4) nach einem der Ansprüche 1 bis 5, **dadurch gekennzeichnet, dass** das taktile Display (8) Teilelemente (36) aufweist, welche kapazitiv, piezoelektrisch, elektrodynamisch, elektromagnetisch, elektromechanisch oder magnetostriktiv oder als dielektrische Elastomerelemente steuerbar ausgebildet sind oder derart ausgebildet sind, dass diese punktuell pneumatisch, hydraulisch oder fluidisch eine Einwirkung auf die Hand oder andere Körperteile des Anwenders im Kollisionspunkt ausüben.

7. Haptisches Displaysystem (4) nach einem der Ansprüche 1 bis 6, **dadurch gekennzeichnet, dass** das taktile Display (8) und/oder die Teilelemente (36) temperierbar ausgebildet sind.

8. Haptisches Displaysystem (4) nach einem der Ansprüche 1 bis 7, **dadurch gekennzeichnet, dass** Teilelemente (29) des Deformationsmechanismus (7) derart ausgebildet sind, dass deren Dimensionierung durch Volumenzu- oder -abnahme veränderlich ausgebildet oder als aktorisches Element ausgebildet ist.

9. Haptisches Displaysystem (4) nach einem der Ansprüche 1 bis 8, **dadurch gekennzeichnet, dass** der Deformationsmechanismus (7) des taktilen Displays (8) ein Trägersubstrat (28) aufweist, welches zur Aufnahme eines oder mehrerer aktorischer Elemente (35) ausgebildet ist.

10. Haptisches Displaysystem nach einem der Ansprüche 1 bis 9, **dadurch gekennzeichnet, dass** der Deformationsmechanismus (7) des taktilen Displays (8) als aktorisches Element, welches aus einer Vielzahl von aktorischen Teilelementen (35, 38) ausgebildet ist, oder als Mehrkammersystem (29, 30) ausgebildet ist.

11. Haptisches Displaysystem (4) nach Anspruch 10, **dadurch gekennzeichnet, dass** aktorische Teilelemente (35) stangenförmig ausgebildet sind.

12. Haptisches Displaysystem (4) nach Anspruch 10, **dadurch gekennzeichnet, dass** das Mehrkammersystem (29, 30) derart ausgebildet ist, dass die Kammern (29) einzeln pneumatisch, fluidisch, hydraulisch und/oder mit granularen Materialen befüllbar ausgebildet sind.

13. System zur Interaktion mit virtuellen Objekten (1), umfassend:
- zumindest eine erste Vorrichtung zur Erfassung von dreidimensionalen Daten zumindest eines Anwenders,
- eine Vorrichtung zur Erfassung von dreidimensionalen Daten zumindest eines Objektes,
- zumindest eine Datenverarbeitungseinrichtung zur Verarbeitung in Echtzeit der erfassten dreidimensionalen Daten des Anwenders und zur Generation einer visuellen Darstellung der dreidimensionalen Daten des Anwenders,
- eine Datenverarbeitungseinrichtung zur Verarbeitung in Echtzeit der erfassten dreidimensionalen Daten eines Objektes und zur Generation einer visuellen dreidimensionalen Darstellung des Objekts (1) in Echtzeit,
- zumindest ein visuelles Subsystem mit einer Anzeigeeinrichtung zur visuellen und synchronisierten Darstellung der dreidimensionalen Daten mindestens des Objektes (1) und des Anwenders und
- zumindest ein haptisches Displaysystem (4) nach einem der Ansprüche 1 bis 12.

14. Verfahren zur Interaktion mit virtuellen Objekten (1) mit dem System nach Anspruch 13, umfassend die Schritte:
- Erfassen dreidimensionaler Daten mindestens eines Anwenders in Echtzeit,
- Erfassung der Bewegung und der Druckkräfte und/oder der verursachten mechanischen Spannungen des Anwenders im Kollisionspunkt,
- Verarbeitung der erfassten Daten der Bewegung und der Druckkräfte und/oder der verursachten mechanischen Spannungen,
- Erzeugung einer visuellen Echtzeit-Darstellung von zumindest einem Körperteil des Anwenders basierend auf den dreidimensionalen Daten des Anwenders,
- Erzeugung einer visuellen dreidimensionalen Echtzeit-Darstellung eines Objektes (1) basierend auf den dreidimensionalen Daten des Objektes,
- synchronisierte Echtzeit-Darstellung der dreidimensionalen Daten des Objektes (1) und des zumindest einen Körperteils des Anwenders in einem visuellen Subsystem, wobei die visualisierten dreidimensionalen Daten des Objekts (1) mit den visualisierten dreidimensionalen Daten des Anwenders in der Anzeigeeinrichtung des visuellen Subsystems dargestellt werden, wobei die Darstellung der Interaktion des zumindest einen Teils des visualisierten Anwenders mit dem visualisierten Objekt (1) im visuellen Subsystem und simultane Interaktion des Anwenders mit einem taktilen Display (8) eines haptischen Displaysystems (4) nach einem der Ansprüche 1 bis 12 erfolgt, wobei bei Kollision des zumindest einen Teils des visualisierten Anwenders mit dem visualisierten Objekt (1) ein Kollisionspunkt ermittelt wird und die dreidimensionalen Daten des Objektes im Kollisionspunkt des zumindest einen Teils des visualisierten Anwenders mit dem visualisierten Objekt (1) im haptischen Displaysystem (4) abgebildet werden.

15. Verfahren nach Anspruch 14, **dadurch gekennzeichnet, dass** die dreidimensionalen Daten mindestens eines Objektes in Echtzeit erfasst werden, wobei das darzustellende Objekt durch eine Vorrichtung zur Erfassung von dreidimensionalen Daten erfasst wird.

16. Verfahren nach einem der Ansprüche 14 oder 15, weiterhin umfassend:
- Erfassung der Augenbewegung des Anwenders,
- Verarbeitung der erfassten Daten der Augenbewegung und Bestimmung eines aktiven Blickfeldes des Anwenders,
- Implementierung der erfassten Daten der Augenbewegung und des aktiven Blickfelds in das visuelle Subsystem, wobei die erfassten Daten der Augenbewegung des Anwenders eine lokale Anpassung der visuellen Darstellung des Objektes sowie der visuellen Darstellung der Handbewegung im Bereich des aktiven Blickfelds steuern.

17. Verfahren nach einem der Ansprüche 14 bis 16 weiterhin umfassend:
- Erfassung der Bewegung und der Druckkräfte und/oder der verursachten mechanischen Spannungen des Anwenders im Kollisionspunkt,
- Verarbeitung der erfassten Daten der Bewegung und der Druckkräfte und/oder der verursachten mechanischen Spannungen,
- Implementierung der erfassten Daten der Bewegung und der Druckkräfte und/oder der verursachten mechanischen Spannungen in das System zur virtuellen Darstellung des Objektes, wobei die erfassten Daten der Bewegung und der Druckkräfte des Anwenders eine lokale Anpassung der virtuellen Darstellung des Objektes sowie der visuellen Darstellung der Handbewegung im Bereich des aktiven Blickfelds steuern.

18. Verwendung eines haptischen Displaysystems (4) nach einem der Ansprüche 1 bis 12 in einem System zur Interaktion mit virtuellen Objekten nach Anspruch 13 sowie in einem Verfahren zur Interaktion mit virtuellen Daten nach einem der Ansprüche 14 bis 17.

## Claims

1. A haptic display system (4) comprising:
- a deformable, shape-changing, tactile display (8), which imparts surface-based, tangible characteristics,
- a deformation mechanism (7), which adjusts the deformable tactile display to the shape of the object surface segment (2) to be displayed, wherein the deformation mechanism (7) comprises various subcomponents (15, 17, 22, 24, 33, 34), which are designed to be positioned variably in relation to each other,
**characterized in that** the haptic display system (4) further comprises a positioning device (5), which moves the tactile display (8), in a correct positional arrangement, to the position in three-dimensional space of the surface segment or surface section (2) of a virtual 3D object (1) to be displayed in tangible form.

2. The haptic display system (4) according to Claim 1, **characterized in that** the device (5) for positioning in three-dimensional space of the haptic display system (4) is designed as a robotic arm, a delta robot, a hexapod (10), a multi-axis system, or a chamber system.

3. The haptic display system (4) according to Claim 1 or 2, **characterized in that** the tactile display (8) is segmented or subdivided into a plurality of elements (36), the behavior of which can be controlled independently of one another.

4. The haptic display system (4) according to any of Claims 1 to 3, **characterized in that** the haptic display system (4) comprises at least one device for generating oscillations, which produces tangible vibrations in the tactile display (8) or in selected subcomponents of the tactile display (8).

5. The haptic display system (4) according to any of Claims 1 to 4, **characterized in that** the haptic display system (4) comprises static displays (8).

6. The haptic display system (4) according to any of Claims 1 to 5, **characterized in that** the tactile display (8) includes subcomponents (36) which are designed as controllable by capacitive, piezoelectric, electrodynamic, electromagnetic, electromechanical, or magnetostrictive means, or as dielectric elastomer elements, or which are designed to act pointwise pneumatically, hydraulically, or fluidically on the hand or other body parts of the user at the collision point.

7. The haptic display system (4) according to any of Claims 1 to 6, **characterized in that** the tactile display (8) and/or the subcomponents (36) are designed as temperature-controllable.

8. The haptic display system (4) according to any of Claims 1 to 7, **characterized in that** subcomponents (29) of the deformation mechanism (7) are designed such that their dimensions can be varied by increasing or decreasing their volume, or are designed as actuating elements.

9. The haptic display system (4) according to any of Claims 1 to 8, **characterized in that** the deformation mechanism (7) of the tactile display (8) includes a carrier substrate (28) which is designed to hold one or more actuating elements (35).

10. The haptic display system (4) according to any of Claims 1 to 9, **characterized in that** the deformation mechanism (7) of the tactile display (8) is designed as an actuating element comprising a plurality of actuating subcomponents (35, 38), or is designed as a multichamber system (29, 30).

11. The haptic display system (4) according to Claim 10, **characterized in that** actuating subcomponents (35) are designed as rod-shaped.

12. The haptic display system (4) according to Claim 10, **characterized in that** the multichamber system (29, 30) is designed such that the chambers (29) can be individually filled pneumatically, fluidically, hydraulically, and/or with granular materials.

13. A system for interacting with virtual objects (1), comprising:
- at least one first device for capturing three-dimensional data of at least one user,
- a device for capturing three-dimensional data of at least one object,
- at least one data processing device for processing in real time the captured three-dimensional data of the user, and for generating a visual representation of the three-dimensional data of the user,
- a data processing device for processing in real time the captured three-dimensional data of an object, and for generating a visual three-dimensional representation of the object (1) in real time,
- at least one visual subsystem with a display device for the visual and synchronized representation of the three-dimensional data of at least the object (1) and the user, and
- at least one haptic display system (4) according to any of Claims 1 to 12.

14. A method for interacting with virtual objects using a system according to Claim 13, comprising the following steps:
- capturing three-dimensional data of at least one user in real time,
- capturing the movement and the compressive forces and/or the mechanical stresses induced by the user at the collision point,
- processing the captured data about the movement and the compressive forces and/or the induced mechanical stresses,
- generating a visual real-time representation of at least one body part of the user based on the three-dimensional data of the user,
- generating a visual three-dimensional real-time representation of an object (1) based on the three-dimensional data of the object,
- providing a synchronized real-time representation of the three-dimensional data of the object (1) and of the at least one body part of the user in a visual subsystem, the visualized three-dimensional data of the object (1) being displayed with the visualized three-dimensional data of the user in the display device of the visual subsystem, wherein the representation of the interaction of the at least one part of the visualized user with the visualized object (1) in the visual subsystem and the simultaneous interaction of the user occur with a tactile display (8) of a haptic display system (4) according to any of Claims 1 to 12, wherein upon collision of the at least one part of the visualized user with the visualized object (1) a collision point is determined, and the three-dimensional data of the object at the collision point of the at least one part of the visualized user with the visualized object (1) are displayed in the haptic display system (4).

15. The method according to Claim 14, **characterized in that** the three-dimensional data of at least one object are captured in real-time, in which the object to be represented is captured by a device for capturing three-dimensional data.

16. The method according to Claim 14 or 15, further comprising:
- capturing eye movements of the user,
- processing the captured eye-movement data and determining the active field of view of the user,
- implementing the captured eye-movement data and the active field of view in the visual subsystem, wherein the captured eye-movement data of the user control the in-situ adjustment of the visual representation of the object and the visual representation of the hand movement in the area of the active field of view.

17. The method according to any of Claims 14 to 16, further comprising:
- capturing the movement and the compressive forces and/or the mechanical stresses induced by the user at the collision point,
- processing the captured data about the movement and the compressive forces and/or the induced mechanical stresses,
- implementing the captured data about the movement and the compressive forces and/or the induced mechanical stresses in the system for virtual representation of the object, wherein the captured data about the movement and the compressive forces of the user control a local adjustment of the virtual representation of the object along with the visual representation of the hand movement in the area of the active field of view.

18. Use of a haptic display system (4) according to any of Claims 1 to 12 in a system for interacting with virtual objects according to Claim 13, and in a method for interacting with virtual data according to any of Claims 14 to 17.

## Revendications

1. Système d'affichage haptique (4), comprenant :
- un affichage tactile déformable (8) à forme variable qui transmet des propriétés tactiles liées à la surface,
- un mécanisme de déformation (7) qui adapte l'affichage tactile déformable (8) à la forme du segment de surface (2) de l'objet à afficher, le mécanisme de déformation (7) présentant divers sous-éléments (15, 17, 22, 24, 33, 34) positionnables de façon variable les uns par rapport aux autres,
**caractérisé en ce que** le système d'affichage haptique (4) présente en outre un dispositif de positionnement (5) qui place l'affichage tactile (8) correctement au niveau de la position du segment ou de la section de surface (2) tactile à afficher d'un objet 3D virtuel (1) dans l'espace tridimensionnel.

2. Système d'affichage haptique (4) selon la revendication 1, **caractérisé en ce que** le dispositif (5) destiné au positionnement du système d'affichage haptique (4) dans l'espace tridimensionnel est réalisé sous la forme d'un bras de robot, d'un robot delta, d'un hexapode (10), d'un système multi-axes ou d'un système de chambres.

3. Système d'affichage haptique (4) selon la revendication 1 ou 2, **caractérisé en ce que** l'affichage tactile (8) présente une segmentation ou une subdivision en plusieurs éléments (36), réalisés de manière à pouvoir être commandés indépendamment les uns des autres en ce qui concerne leur comportement.

4. Système d'affichage haptique (4) selon l'une des revendications 1 à 3, **caractérisé en ce que** le système d'affichage haptique (4) présente au moins un dispositif de génération d'oscillations, générant une vibration tactile dans l'affichage tactile (8) ou dans des sous-éléments individuels de l'affichage tactile (8).

5. Système d'affichage haptique (4) selon l'une des revendications 1 à 4, **caractérisé en ce que** le système d'affichage haptique (4) comprend des affichages statiques (8).

6. Système d'affichage haptique (4) selon l'une des revendications 1 à 5, **caractérisé en ce que** l'affichage tactile (8) présente des sous-éléments (36) réalisés de façon capacitive, piézoélectrique, électrodynamique, électromagnétique, électromécanique ou magnétostrictive ou sous la forme des éléments élastomères diélectriques pouvant être commandés, ou sont réalisés de telle sorte qu'ils exercent ponctuellement une action sur la main ou sur d'autres parties du corps de l'utilisateur au point de collision de façon pneumatique, hydraulique ou fluidique.

7. Système d'affichage haptique (4) selon l'une des revendications 1 à 6, **caractérisé en ce que** l'affichage tactile (8) et/ou les sous-éléments (36) sont réalisés de façon thermorégulable.

8. Système d'affichage haptique (4) selon l'une des revendications 1 à 7, **caractérisé en ce que** les sous-éléments (29) du mécanisme de déformation (7) sont réalisés de telle sorte que leur dimensionnement est variable par augmentation ou diminution de volume ou sert d'élément d'actionnement.

9. Système d'affichage haptique (4) selon l'une des revendications 1 à 8, **caractérisé en ce que** le mécanisme de déformation (7) de l'affichage tactile (8) présente un substrat porteur (28) conçu pour recevoir un ou plusieurs éléments d'actionnement (35).

10. Système d'affichage haptique selon l'une des revendications 1 à 9, **caractérisé en ce que** le mécanisme de déformation (7) de l'affichage tactile (8) est réalisé sous la forme d'un élément d'actionnement, conçu à partir d'une pluralité de sous-éléments d'actionnement (35, 38) ou sous la forme d'un système à chambres multiples (29, 30).

11. Système d'affichage haptique (4) selon la revendication 10, **caractérisé en ce que** les sous-éléments d'actionnement (35) sont réalisés sous la forme d'une tige.

12. Système d'affichage haptique (4) selon la revendication 10, **caractérisé en ce que** le système à chambres multiples (29, 30) est réalisé de telle sorte que les chambres (29) peuvent être remplies individuellement de façon pneumatique, fluidique, hydraulique et/ou de matériaux granulaires.

13. Système d'interaction avec des objets virtuels (1), comprenant :
- au moins un premier dispositif de saisie de données tridimensionnelles d'au moins un utilisateur,
- un dispositif de saisie de données tridimensionnelles d'au moins un objet,
- au moins un moyen de traitement de données destiné à traiter en temps réel les données tridimensionnelles saisies de l'utilisateur et à générer une représentation visuelle des données tridimensionnelles de l'utilisateur,
- un moyen de traitement de données destiné à traiter en temps réel les données tridimensionnelles saisies d'un objet et à générer en temps réel une représentation visuelle tridimensionnelle de l'objet (1),
- au moins un sous-système visuel comportant un moyen d'affichage destiné à la représentation visuelle et synchronisée des données tridimensionnelles au moins de l'objet (1) et de l'utilisateur et
- au moins un système d'affichage haptique (4) selon l'une des revendications 1 à 12.

14. Procédé d'interaction avec des objets virtuels (1) au moyen du système selon la revendication 13, comprenant les étapes :
- de saisie en temps réel de données tridimensionnelles d'au moins un utilisateur,
- de saisie du mouvement et des forces de pression et/ou des contraintes mécaniques causées par l'utilisateur au point de collision,
- de traitement des données saisies du mouvement et des forces de pression et/ou des contraintes mécaniques causées,
- de génération d'une représentation visuelle en temps réel d'au moins une partie du corps de l'utilisateur à partir des données tridimensionnelles de l'utilisateur,
- de génération d'une représentation visuelle tridimensionnelle en temps réel d'un objet (1) à partir des données tridimensionnelles de l'objet,
- de représentation synchronisée en temps réel des données tridimensionnelles de l'objet (1) et de l'au moins une partie du corps de l'utilisateur dans un sous-système visuel, les données tridimensionnelles visualisées de l'objet (1) étant représentées dans le moyen d'affichage du sous-système visuel avec les données tridimensionnelles visualisées de l'utilisateur, la représentation de l'interaction de ladite au moins une partie de l'utilisateur visualisé avec l'objet visualisé (1) ayant lieu dans le sous-système visuel et une interaction simultanée de l'utilisateur se produisant avec un affichage tactile (8) d'un système d'affichage haptique (4) selon l'une des revendications 1 à 12, un point de collision étant déterminé en cas de collision de ladite au moins une partie de l'utilisateur visualisé avec l'objet visualisé (1) et les données tridimensionnelles de l'objet au point de collision de ladite au moins une partie de l'utilisateur visualisé avec l'objet visualisé (1) étant reproduites dans le système d'affichage haptique (4).

15. Procédé selon la revendication 14, **caractérisé en ce que** les données tridimensionnelles d'au moins un objet sont saisies en temps réel, l'objet à représenter étant saisi par un dispositif de saisie de données tridimensionnelles.

16. Procédé selon l'une des revendications 14 ou 15, comprenant en outre :
- la saisie du mouvement oculaire de l'utilisateur,
- le traitement des données saisies du mouvement oculaire et la détermination d'un champ de vision actif de l'utilisateur,
- l'implémentation des données saisies du mouvement oculaire et du champ de vision actif dans le sous-système visuel, les données saisies du mouvement oculaire de l'utilisateur entraînant un ajustement local de la représentation visuelle de l'objet et de la représentation visuelle du mouvement de la main dans la zone du champ de vision actif.

17. Procédé selon l'une des revendications 14 à 16, comprenant en outre :
- la saisie du mouvement et des forces de pression et/ou des contraintes mécaniques causées par l'utilisateur au point de collision,
- le traitement des données saisies du mouvement et des forces de pression et/ou des contraintes mécaniques causées,
- l'implémentation des données saisies du mouvement et des forces de pression et/ou des contraintes mécaniques causées dans le système de représentation virtuelle de l'objet, les données saisies du mouvement et des forces de pression de l'utilisateur entraînant un ajustement local de la représentation virtuelle de l'objet et de la représentation visuelle du mouvement de la main dans la zone du champ de vision actif.

18. Utilisation d'un système d'affichage haptique (4) selon l'une des revendications 1 à 12 dans un système d'interaction avec des objets virtuels selon la revendication 13 ainsi que dans un procédé d'interaction avec des données virtuelles selon l'une des revendications 14 à 17.
